(19) Europäisches Patentamt
European Patent Office
Office européen des brevets

(11) EP 4 631 980 A1

(12) # EUROPEAN PATENT APPLICATION
published in accordance with Art. 153(4) EPC

(43) Date of publication:
**15.10.2025 Bulletin 2025/42**

(21) Application number: **23900628.1**

(22) Date of filing: **04.12.2023**

(51) International Patent Classification (IPC):
***C08F 8/28** (2006.01)* ***B32B 17/04** (2006.01)*
***B32B 17/10** (2006.01)* ***B32B 27/28** (2006.01)*
***B60J 1/00** (2006.01)* ***C03C 27/12** (2006.01)*
***C08F 216/38** (2006.01)* ***C08L 29/14** (2006.01)*

(52) Cooperative Patent Classification (CPC):
**B32B 17/00; B32B 17/04; B32B 17/10; B32B 27/28; B60J 1/00; C08F 8/28; C08F 216/38; C08L 29/14**

(86) International application number:
**PCT/JP2023/043348**

(87) International publication number:
**WO 2024/122513 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.12.2022 JP 2022194499**
**24.07.2023 JP 2023120136**

(71) Applicant: **SEKISUI CHEMICAL CO., LTD.**
**Osaka-shi**
**Osaka**
**530-8565 (JP)**

(72) Inventors:
- **NOMURA, Keisuke**
  **Koka-shi, Shiga 528-8585 (JP)**
- **SHIMIZU, Kazuki**
  **Koka-shi, Shiga 528-8585 (JP)**
- **NOHARA, Atsushi**
  **Koka-shi, Shiga 528-8585 (JP)**
- **TAKAHASHI, Yuuma**
  **Dallas, Texas 75234 (US)**
- **ARAI, Yoshito**
  **Mishima-gun, Osaka 618-0021 (JP)**

(74) Representative: **Ter Meer Steinmeister & Partner Patentanwälte mbB**
**Nymphenburger Straße 4**
**80335 München (DE)**

(54) # POLYVINYL ACETAL RESIN, INTERLAYER FOR LAMINATED GLASS, LAMINATE, AND LAMINATED GLASS

(57) The polyvinyl acetal resin according to the present invention includes a predetermined structural unit (a), structural unit (b), and structural unit (c), wherein an integration value of a peak attributed to a methylene C atom at a predetermined position of the structural unit (a), an integration value of a peak attributed to a methylene C atom at a predetermined position of the structural unit (b), and an integration value of a peak attributed to a methylene C atom at a predetermined position of the structural unit (c) in a $^{13}$C-NMR spectrum satisfy a predetermined relationship, and the polyvinyl acetal resin has a degree of acetalization of 65 mol% or more and less than 75 mol%. According to the present invention, it is possible to provide a polyvinyl acetal resin capable of producing an interlayer film for laminated glass that can suppress residual air or embossments during compression bonding without going through an autoclave process under high-temperature and high-pressure conditions, an interlayer film for laminated glass including the polyvinyl acetal resin, a laminated body including the interlayer film for laminated glass, and laminated glass including the interlayer film for laminated glass or the laminated body.

EP 4 631 980 A1

## Description

### Technical Field

The present invention relates to a polyvinyl acetal resin, an interlayer film for laminated glass using the polyvinyl acetal resin, a laminated body including the interlayer film for laminated glass, and laminated glass including the interlayer film for laminated glass or the laminated body.

### Background Art

Conventionally, laminated glass, in which two glass sheets are integrated with an interlayer film interposed between them, is widely known. Interlayer films are often formed from plasticized polyvinyl acetal, which is a polyvinyl acetal resin mixed with a plasticizer. Laminated glass is safe, since the laminated glass does not easily cause glass shards to scatter even if damaged by an external impact. Thus the laminated glass is widely used for the window glass in vehicles such as automobiles, aircraft, buildings, or the like. Examples of polyvinyl acetal resins used in interlayer films include the polyvinyl acetal resins disclosed in PTL 1 and PTL 2.

Laminated glass is generally produced by arranging an interlayer film between two glass sheets, performing a preliminary degassing process, and then compression bonding the glass and the interlayer film by heating and pressurizing in an autoclave (ACV) process at a temperature of about 130 to 140°C and a pressure of about 1.3 MPa.

Further, various studies and enhancements have been made in relation to interlayer films for laminated glass. PTL 1 discloses a laminated glass interlayer film having an amount of change in thickness when subjected to a compressive creep test that is within a certain range (for example, see PTL 3).

In recent years, laminated glass is sometimes required to have various functions, and for example, a functional film such as a light control body may be arranged between the two glass sheets. When incorporating a functional film such as a light control body into laminated glass, it is known to arrange the interlayer film between the functional film and each glass sheet to integrate the two glass sheets and the functional film with the interlayer film interposed between them (for example, see PTL 4).

### Citation List

### Patent Literature

PTL 1: JP 2011-127117 A
PTL 2: JP 2019-513865 T
PTL 3: WO 2021/117596 A1
PTL 4: WO 2019/066042 A1

### Summary of Invention

### Technical Problem

However, functional films such as light control bodies are sensitive to heat and pressure, and thus there is often the problem that if the glass sheets, interlayer film, and functional film are compression bonded under conventional high-temperature and high-pressure conditions in an autoclave, the functionality of the functional film is lost. Another problem is that heating to high temperatures is required, which releases a large amount of carbon dioxide. On the other hand, if the compression bonding is performed without an autoclave process or by autoclaving at low temperatures, air or embossments may remain between the interlayer film and the glass sheets or between the interlayer film and the functional film during compression bonding, causing the transparency of laminated glass obtained by the compression bonding to deteriorate.

Therefore, an object of the present invention is to provide a polyvinyl acetal resin that can increase fluidity, flexibility, and the like, enhance thermocompression bonding properties at low temperatures, and, for example, in the production of laminated glass, suppress residual air or embossments during compression bonding without going through an autoclave process under high-temperature and high-pressure conditions. A further object of the present invention is also to provide an interlayer film for laminated glass including the polyvinyl acetal resin, a laminated body including the interlayer film for laminated glass, and laminated glass including the interlayer film for laminated glass or the laminated body.

Solution to Problem

As a result of extensive studies, the present inventors have found that the above-described problems can be solved by using a polyvinyl acetal resin having a predetermined $^{13}C$-NMR spectrum and a predetermined degree of acetalization, thereby completing the present invention as described below. That is, the present invention provides the following [1] to [29].

[1] A polyvinyl acetal resin including a structural unit (a) represented by the following formula (a), a structural unit (b) represented by the following formula (b), and a structural unit (c) represented by the following formula (c), wherein

when an integration value of a peak attributed to a methylene C atom at position (a)' of the structural unit (a) is designated as I(a)', an integration value of a peak attributed to a methylene C atom at position (b)' of the structural unit (b) is designated as I(b)', and an integration value of a peak attributed to a methylene C atom at position (c)' of the structural unit (c) is designated as I(c)' in a $^{13}C$-NMR spectrum obtained by $^{13}C$-NMR (nuclear magnetic resonance) measurement, the following expression (1) is satisfied, and
the polyvinyl acetal resin has a degree of acetalization of 65 mol% or more and less than 75 mol%,

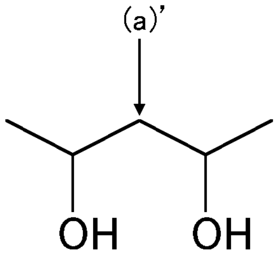

(a)

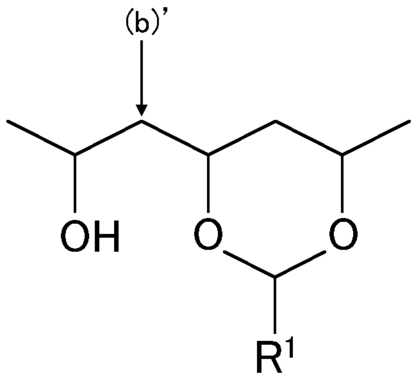

(b)

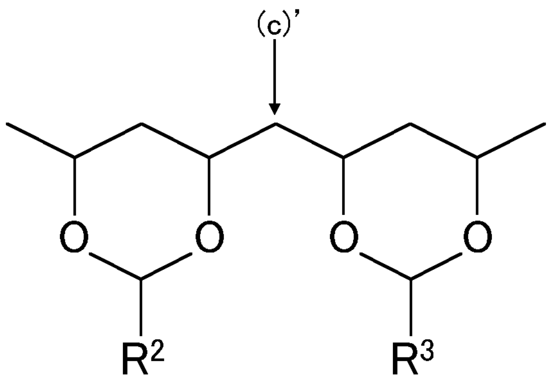

(c)

$$I(a)'/(I(b)'+I(c)')<0.30 \quad (1)$$

wherein $R^1$, $R^2$, and $R^3$ in formula (b) and formula (c) are each hydrogen or a hydrocarbon group having 1 or more and 9 or less carbon atoms.

[2] The polyvinyl acetal resin according to the above [1], wherein $R^1$, $R^2$, and $R^3$ are each an alkyl group having from 1 to 6 carbon atoms.
[3] The polyvinyl acetal resin according to the above [2], wherein $R^1$, $R^2$, and $R^3$ are each an n-propyl group.
[4] The polyvinyl acetal resin according to any one of the above [1] to [3], which includes a structural unit (d) represented by the following formula (d) and a structural unit (e) represented by the following formula (e), wherein

when an integration value of a peak attributed to a methine C atom at position (d)' of the structural unit (d) is designated as I(d)' and an integration value of a peak attributed to a methine C atom at position (e)' of the structural unit (e) is designated as I(e)' in a $^{13}$C-NMR spectrum obtained by $^{13}$C-NMR (nuclear magnetic resonance) measurement, the following expression (2) is satisfied,

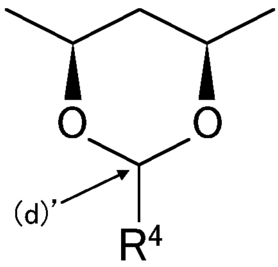

(d)

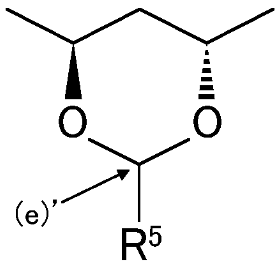

(e)

$$I(d)'/(I(d)'+I(e)')<0.763 \quad (2)$$

wherein $R^4$ and $R^5$ in formula (d) and formula (e) are each hydrogen or a hydrocarbon group having 1 or more and 9 or less carbon atoms.

[5] The polyvinyl acetal resin according to any one of the above [1] to [4], which includes a structural unit (f) represented by the following formula (f), a structural unit (g) represented by the following formula (g), a structural unit (h) represented by the following formula (h), a structural unit (i) represented by the following formula (i), a structural unit (j) represented by the following formula (j), and a structural unit (k) represented by the following formula (k), wherein

when an integration value of a peak attributed to a methine C atom at position (f)' of the structural unit (f) is designated as I(f)', an integration value of a peak attributed to a methine C atom at position (g)' of the structural unit (g) is designated as I(g)', an integration value of a peak attributed to a methine C atom at position $(h)'_2$ of the structural unit (h) is designated as $I(h)'_2$, an integration value of a peak attributed to a methine C atom at position (i)' of the structural unit (i) is designated as I(i)', an integration value of a peak attributed to a methine C atom at position (j)' of the structural unit (j) is designated as I(j)', and an integration value of a peak attributed to a methine C atom at position (k)' of the structural unit (k) is designated as I(k)' in a $^{13}$C-NMR spectrum obtained by $^{13}$C-NMR (nuclear magnetic resonance) measurement, the following expression (3) is satisfied,

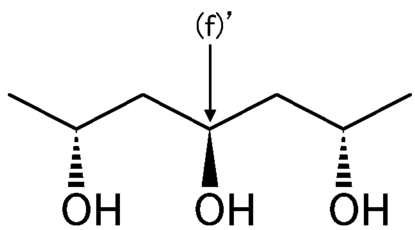

(f)

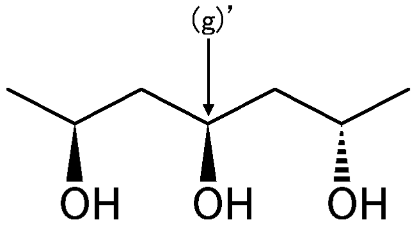

(g)

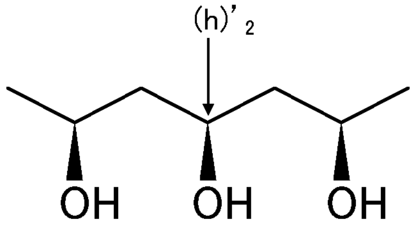

(h)

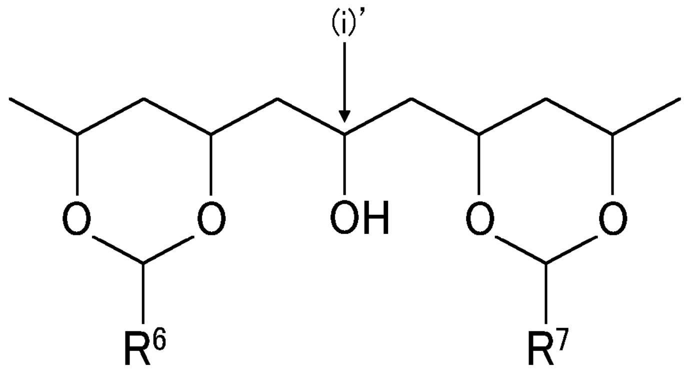

(i)

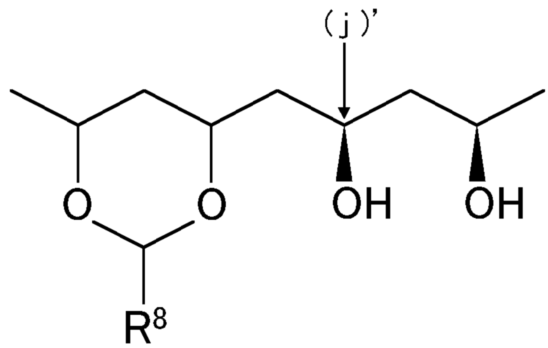

(j)

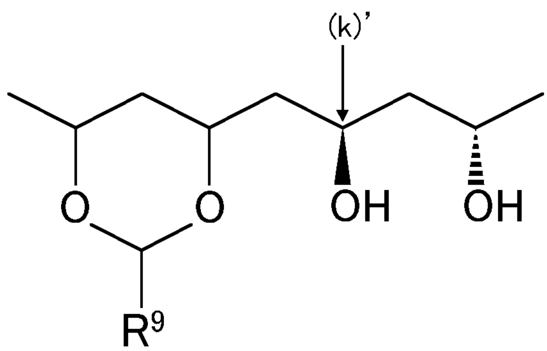

(k)

$$(I(f)'+I(g)'+I(h)'_2)/(I(f)'+I(g)'+I(h)'_2+I(i)'+I(j)'+I(k)')<0.23 \quad (3)$$

wherein $R^6$ to $R^9$ in formula (i), formula (j), and formula (k) are each hydrogen or a hydrocarbon group having 1 or

more and 9 or less carbon atoms.

[6] The polyvinyl acetal resin according to any one of the above [1] to [5], which has a weight-average molecular weight (Mw) of 220000 or more.
[7] The polyvinyl acetal resin according to any one of the above [1] to [6], wherein

the polyvinyl acetal resin is produced by a method including a mixing process of mixing a polyvinyl alcohol and an aldehyde, and an aging process of aging the mixture obtained in the mixing process, and
the aging temperature in the aging process is 30°C or higher and 65°C or lower.

[8] The polyvinyl acetal resin according to the above [7], wherein the aging temperature is 40°C or higher and 57°C or lower.
[9] A method for producing a polyvinyl acetal resin, comprising:

a mixing process of mixing a polyvinyl alcohol and an aldehyde; and
an aging process of aging the mixture obtained in the mixing process, wherein
the aging temperature in the aging process is 30°C or higher and 65°C or lower.

[10] The method for producing a polyvinyl acetal resin according to the above [9], wherein the aging temperature is 40°C or higher and 58°C or lower.
[11] An interlayer film for laminated glass including a single-layer structure or a multilayer structure, which includes at least a polyvinyl acetal resin layer including the polyvinyl acetal resin according to any one of the above [1] to [8].
[12] The interlayer film for laminated glass according to the above [11], wherein the polyvinyl acetal resin layer has an amount of change in thickness of 80 μm or more when compressed according to a compressive creep test conducted under the following conditions:

(Compressive creep test conditions)

A test sample having a diameter of 8 mm and a thickness of 700 to 900 μm produced from the polyvinyl acetal resin layer is compressed for 30 minutes under a load of 410 g and a temperature of 30°C, a thickness (T1) of the test sample is then measured, the temperature is then increased from 30°C to 90°C at a heating rate of 6°C/min while maintaining the load of 410 g, the test sample is compressed for 5 minutes under the load of 410 g and temperature of 90°C, a thickness (T2) of the test sample A is then measured, and an absolute value of a difference between the thickness (T1) and the thickness (T2) of the test sample is taken as the amount of change in thickness.

[13] The interlayer film for laminated glass according to the above [12], wherein the amount of change in thickness is 600 μm or less.
[14] The interlayer film for laminated glass according to any one of the above [11] to [13], wherein the polyvinyl acetal resin layer further comprises a plasticizer.
[15] The interlayer film for laminated glass according to the above [14], wherein the plasticizer has a content of 10 parts by mass or more and 100 parts by mass or less with respect to 100 parts by mass of the polyvinyl acetal resin contained in the polyvinyl acetal resin layer.
[16] The interlayer film for laminated glass according to the above [14] or [15], wherein the plasticizer is at least one selected from the group consisting of an organic ester plasticizer, an organic phosphate ester plasticizer, an organic phosphite ester plasticizer, a polyalkylene glycol plasticizer, a polyoxyalkylene ether plasticizer, and an alcohol plasticizer.
[17] The interlayer film for laminated glass according to the above [16], wherein the plasticizer is at least one plasticizer selected from the group consisting of triethylene glycol-di-2-ethylhexanoate (3GO), polyoxyethylene polyoxypropylene glycol, polyoxypropylene glyceryl ether, polyoxypropylene diglyceryl ether, or a derivative of these in which a part of the hydrogen atoms of a terminal hydroxyl group is substituted with an alkyl group.
[18] The thermoplastic resin film according to any one of the above [11] to [17], wherein the polyvinyl acetal resin layer has a thickness of 100 μm or more and 2000 μm or less.
[19] A laminated body including:

the interlayer film for laminated glass according to any one of the above [11] to [18]; and
a functional layer different from the interlayer film for laminated glass.

[20] The laminated body according to the above [19], wherein the functional layer is at least one film selected from the

group consisting of a light control film, a display element film, a polarizing film, a retardation film, and an antireflection film.

[21] The laminated body according to the above [19] or [20], wherein the functional layer includes an electronic component.

[22] The laminated body according to any one of the above [19] to [21], wherein the functional layer is a solar cell element.

[23] Laminated glass including:

a first laminated glass member;
a second laminated glass member; and
the interlayer film for laminated glass according to any one of the above [19] to [22], which is arranged between the first laminated glass member and the second laminated glass member.

[24] Laminated glass including:

a first laminated glass member;
a second laminated glass member; and
the laminated body according to the above [22], which is arranged between the first laminated glass member and the second laminated glass member.

[25] A method for producing the laminated glass according to the above [23] or [24], wherein at least a thermoplastic resin film or a laminated body is arranged between the first transparent material substrate and the second transparent material substrate, and the at least a thermoplastic resin film or laminated body and the first transparent material substrate and second transparent material substrate are bonded together by compression bonding to obtain laminated glass.

[26] The laminated glass production method according to the above [25], wherein

the thermoplastic resin film contains a polyvinyl acetal resin,
the polyvinyl acetal resin is produced by a method including a mixing process of mixing a polyvinyl alcohol and an aldehyde and an aging process of aging the mixture obtained in the mixing process, and
the aging temperature in the aging process is 30°C or higher and 65°C or lower.

[27] The laminated glass production method according to the above [26], wherein the aging temperature is 40°C or higher and 57°C or lower.

[28] The laminated glass production method according to any one of the above [25] to [27], wherein an optical laminated body is obtained by compression bonding at a temperature of 110°C or lower.

[29] The laminated glass production method according to any one of the above [25] to [28], wherein laminated glass is obtained by compression bonding under a pressure of 1.2 MPa or less.

Advantageous Effects of Invention

According to the present invention, it is possible to provide a polyvinyl acetal resin capable of producing an interlayer film for laminated glass that can suppress residual air or embossments during compression bonding without going through an autoclave process under high-temperature and high-pressure conditions. Further, it is also possible to provide an interlayer film for laminated glass including the polyvinyl acetal resin, a laminated body including the interlayer film for laminated glass, and laminated glass including the interlayer film for laminated glass or the laminated body.

Brief Description of Drawings

[Fig. 1] Fig. 1 is a diagram showing a layer structure of laminated glass in a first embodiment of the present invention.

[Fig. 2] Fig. 2 is a diagram showing a layer structure of laminated glass in a second embodiment of the present invention.

[Fig. 3] Figs. 3(a) to 3(c) are each a photograph showing an example of laminated glass placed on a blackout curtain.

[Fig. 4] Fig. 4 is a diagram showing a $^{13}$C-NMR spectrum of the polyvinyl acetal resin of Example 2.

[Fig. 5] Fig. 5 is a diagram showing a $^{13}$C-NMR spectrum of the polyvinyl acetal resin of Comparative Example 1.

Description of Embodiments

<Polyvinyl acetal resin>

The polyvinyl acetal resin according to the present invention includes a structural unit (a) represented by the following formula (a), a structural unit (b) represented by the following formula (b), and a structural unit (c) represented by the following formula (c), and satisfies the following expression (1). I(a)' in expression (1) is the integration value of the peak attributed to the methylene C atom at the position (a)' of the structural unit (a) in a $^{13}$C-NMR spectrum obtained by $^{13}$C-NMR (nuclear magnetic resonance) measurement. I(b)' in expression (1) is the integration value of the peak attributed to the methylene C atom at the position (b)' of the structural unit (b) in the $^{13}$C-NMR spectrum. I(c)' in expression (1) is the integration value of the peak attributed to the methylene C atom at the position (c)' of the structural unit (c) in the $^{13}$C-NMR spectrum. In addition, the polyvinyl acetal resin according to the present invention has a degree of acetalization of 65 mol% or more and less than 75 mol%.

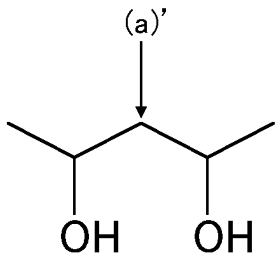

(a)

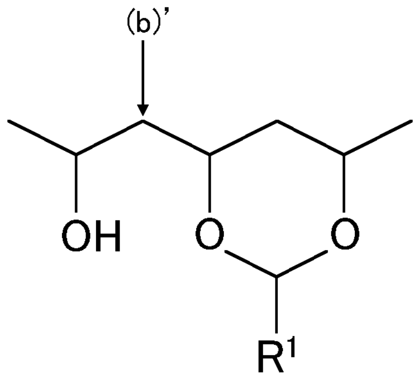

(b)

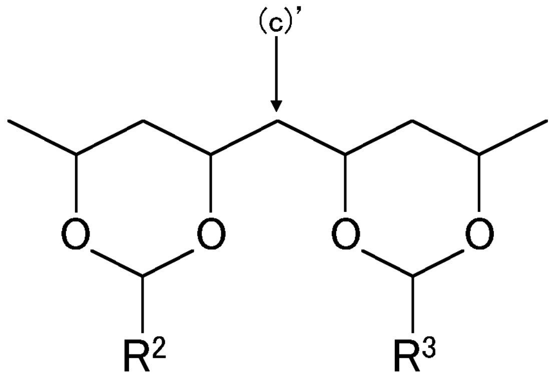

(c)

$R^1$, $R^2$, and $R^3$ in formula (b) and formula (c) are each hydrogen or a hydrocarbon group having 1 or more and 9 or less carbon atoms.

$$I(a)'/(I(b)'+I(c)')<0.30 \quad (1)$$

($^{13}$C-NMR spectrum)

As described above, the polyvinyl acetal resin according to the present invention satisfies the above expression (1). If the polyvinyl acetal resin does not satisfy the above expression (1), it is difficult to increase the fluidity, flexibility, and the like of the polyvinyl acetal resin at low temperatures, and it is difficult to enhance thermocompression bonding properties at low temperatures. Therefore, when laminated glass is produced by compression bonding an interlayer film for laminated glass produced using a polyvinyl acetal resin onto a laminated glass member or functional layer using a low-temperature autoclave or means other than an autoclave, air or embossments may remain between the interlayer film for laminated glass and the laminated glass member or functional layer, resulting in a deterioration in the transparency of the laminated glass. Therefore, for example, when producing laminated glass from an interlayer film for laminated glass produced using a polyvinyl acetal resin, an autoclave or the like under high-temperature and high-pressure conditions is required to suppress residual air or embossments.

From this viewpoint, the polyvinyl acetal resin according to the present invention preferably satisfies the following formula (1-a), more preferably satisfies the following formula (1-b), further preferably satisfies the following formula (1-c), still further preferably satisfies the following formula (1-d) is satisfied, and particularly preferably satisfies the following formula (1-e).

$$I(a)'/(I(b)'+I(c)')\leq 0.295 \quad (1\text{-a})$$

$$I(a)'/(I(b)'+I(c)')\leq 0.290 \quad (1\text{-b})$$

$$I(a)'/(I(b)'+I(c)')\leq 0.285 \quad (1\text{-c})$$

$$I(a)'/(I(b)'+I(c)')\leq 0.280 \quad (1\text{-d})$$

$$I(a)'/(I(b)'+I(c)')\leq 0.274 \quad (1\text{-e})$$

The lower limit value of the range of the value of I(a)'/(I(b)'+I(c)') in the polyvinyl acetal resin according to the present invention is not particularly limited, but is, for example, 0.10, preferably 0.15, more preferably 0.20, and further preferably 0.23.

I(a)' is, for example, the integration value in the 44.6 to 46 ppm section of the peak attributed to the methylene C atom at the position (a)' of the structural unit (a). Further, I(b)' is, for example, the integration value in the 43 to 44.6 ppm section of the peak attributed to the methylene C atom at the position (b)' of the structural unit (b). In addition, I(c)' is, for example, the integration value in the 43 to 44.6 ppm section of the peak attributed to the methylene C atom at the position (c)' of the structural unit (c). The peak attributed to the methylene C atom at the position (b)' of the structural unit (b) and the peak attributed to the methylene C atom at the position (c)' of the structural unit (c) are both present in the section of 43 to 44.6 ppm, and therefore (I(b)'+I(c)') is the integration value of the peaks that are present in the 43 to 44.6 ppm section.

The distribution of hydroxyl groups in the polyvinyl acetal resin can be determined based on the value of I(a)'/(I(b)'+I(c)') of the polyvinyl acetal resin. For example, if the value of I(a)'/(I(b)'+I(c)') is large, it is considered that the hydroxyl groups are present in a fixed manner in the polyvinyl acetal resin, and if the value of I(a)'/(I(b)'+I(c)') is small, it is considered that the hydroxyl groups are present in a random manner, and as a result, it is thought that the fluidity, flexibility, and the like of the polyvinyl acetal resin at low temperatures are increased, and thermocompression bonding properties at low temperatures are enhanced as described above.

The value of I(a)'/(I(b)'+I(c)') in the polyvinyl acetal resin according to the present invention can be adjusted, for example, by adjusting the production conditions when producing the polyvinyl acetal resin. Specifically, as described later, the above-described value can be adjusted by adjusting the aging temperature in the aging process performed when producing the polyvinyl acetal resin. For example, by setting the aging temperature to a relatively low temperature, it is thought that the transition of the polyvinyl acetal resin from a racemo type structure to a meso type structure is suppressed, and as a result, the hydroxyl groups are present in the polyvinyl acetal resin in a random manner, which is thought to cause the value of I(a)'/(I(b)'+I(c)') to be lower.

The $^{13}$C-NMR spectrum of the polyvinyl acetal resin according to the present invention can be measured, for example, by the method described in the Examples.

The polyvinyl acetal resin according to the present invention preferably includes a structural unit (d) represented by the following formula (d) and a structural unit (e) represented by the following formula (e). Further, it is preferred that the following expression (2) is satisfied. I(d)' in expression (2) is the integration value of the peak attributed to the methine C

atom at the position (d)' of the structural unit (d) in the $^{13}C$-NMR spectrum. I(e)' in expression (2) is the integration value of the peak attributed to the methine C atom at the position (e)' of the structural unit (e) in the $^{13}C$-NMR spectrum.

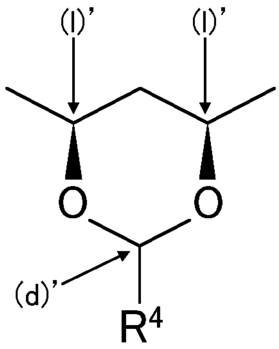

(d)

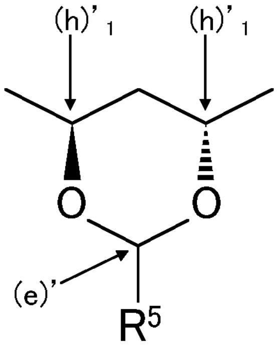

(e)

$R^4$ and $R^5$ in formula (d) and formula (e) are each hydrogen or a hydrocarbon group having 1 or more and 9 or less carbon atoms.

$$I(d)'/(I(d)'+I(e)')<0.763 \quad (2)$$

When the polyvinyl acetal resin satisfies the above expression (2), the fluidity, flexibility, and the like of the polyvinyl acetal resin at low temperatures tend to be good, and thermocompression bonding properties at low temperatures tend to be better. Therefore, the interlayer film for laminated glass produced using the polyvinyl acetal resin can be used to produce laminated glass by compression bonding the interlayer film for laminated glass onto a laminated glass member or a functional layer using a low-temperature autoclave or means other than an autoclave even more easily. That is, when laminated glass is produced by compression bonding an interlayer film for laminated glass onto a laminated glass member or functional layer using a low-temperature autoclave or means other than an autoclave, it is even easier to suppress a deterioration in the transparency of the laminated glass caused by residual air or embossments between the interlayer film for laminated glass and the laminated glass member or functional layer. From this viewpoint, the polyvinyl acetal resin according to the present invention more preferably satisfies the following formula (2-a), further preferably satisfies the following formula (2-b), and particularly preferably satisfies the following formula (2-c).

$$I(d)'/(I(d)'+I(e)')\leq 0.761 \quad (2\text{-}a)$$

$$I(d)'/(I(d)'+I(e)')\leq 0.757 \quad (2\text{-}b)$$

$$I(d)'/(I(d)'+I(e)')\leq 0.754 \quad (2\text{-}c)$$

The lower limit value of the range of the value of I(d)'/(I(d)'+I(e)') in the polyvinyl acetal resin according to the present invention is not particularly limited, but is, for example, 0.50, preferably 0.60, more preferably 0.65, and further preferably 0.70.

I(d)' is, for example, the integration value in the 98.5 to 101.4 ppm section of the peak attributed to the methylene C atom at the position (d)' of the structural unit (d). Further, I(e)' is, for example, the integration value in the 92.5 to 94.5 ppm

section of the peak attributed to the methylene C atom at the position (e)' of the structural unit (e).

The value of I(d)'/(I(d)'+I(e)') in the polyvinyl acetal resin represents the ratio of meso type structures in the polyvinyl acetal resin. When the ratio of meso type structures in the polyvinyl acetal resin decreases, it means that acetalization has progressed under mild reaction conditions, and as a result, hydroxyl groups are less likely to exist as blocks, and hence the flexibility of polyvinyl acetal resin is thought to be enhanced.

The value of I(d)'/(I(d)'+I(e)') in the polyvinyl acetal resin according to the present invention can be adjusted by adjusting the production conditions when producing the polyvinyl acetal resin. Specifically, as described later, the above-described value can be adjusted by adjusting the aging temperature in the aging process performed when producing the polyvinyl acetal resin. For example, by setting the aging temperature to a relatively low temperature, it is thought that the transition of the polyvinyl acetal resin from a racemo type structure to a meso type structure is suppressed, and as a result, the value of I(d)'/(I(d)'+I(e)') in the polyvinyl acetal resin can be lower.

The polyvinyl acetal resin according to the present invention preferably includes a structural unit (f) represented by the following formula (f), a structural unit (g) represented by the following formula (g), a structural unit (h) represented by the following formula (h), a structural unit (i) represented by the following formula (i), a structural unit (j) represented by the following formula (j), and a structural unit (k) represented by the following formula (k). Further, it is preferred that the following expression (3) is satisfied. I(f)' in expression (3) is the integration value of the peak attributed to the methine C atom at the position (f)' of the structural unit (f) in the $^{13}$C-NMR spectrum. I(g)' in expression (3) is the integration value of the peak attributed to the methine C atom at the position (g)' of the structural unit (g) in the $^{13}$C-NMR spectrum. I(h)'$_2$ in expression (3) is the integration value of the peak attributed to the methine C atom at the position (h)'$_2$ of the structural unit (h) in the $^{13}$C-NMR spectrum. I(i)' in expression (3) is the integration value of the peak attributed to the methine C atom at the position (i)' of the structural unit (i) in the $^{13}$C-NMR spectrum. I(j)' in expression (3) is the integration value of the peak attributed to the methine C atom at the position (j)' of the structural unit (j) in the $^{13}$C-NMR spectrum. I(k)' in expression (3) is the integration value of the peak attributed to the methine C atom at the position (k)' of the structural unit (k) in the $^{13}$C-NMR spectrum.

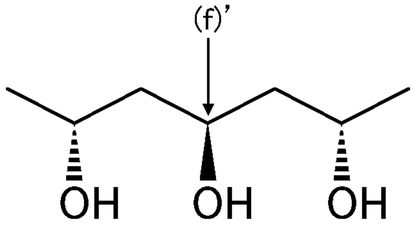

(f)

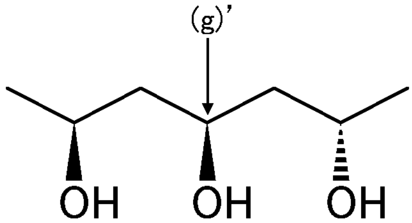

(g)

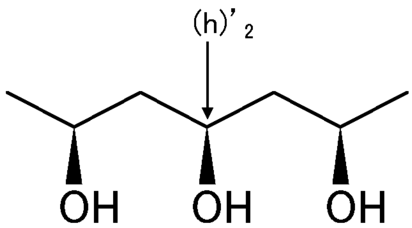

(h)

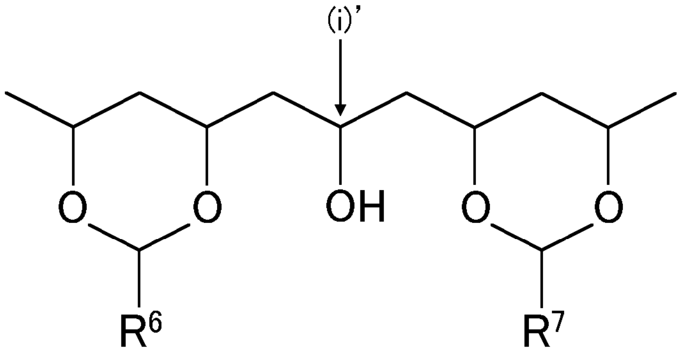

(i)

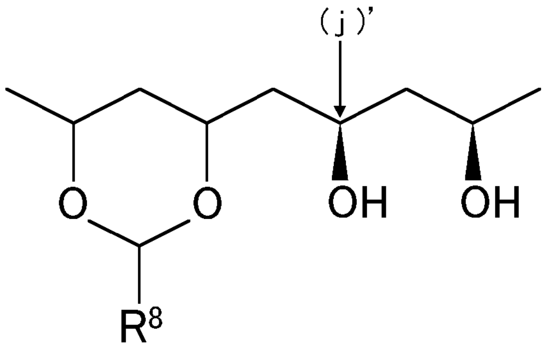

(j)

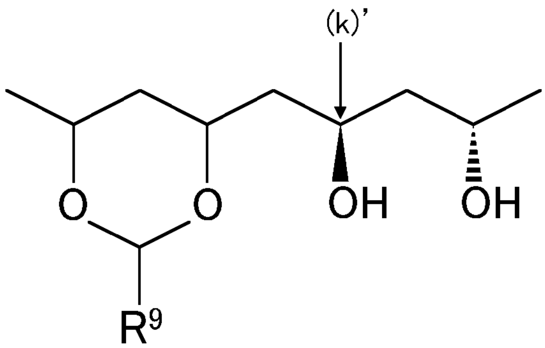

(k)

$R^6$ to $R^9$ in formula (i), formula (j), and formula (k) are each hydrogen or a hydrocarbon group having 1 or more and 9 or less carbon atoms.

$$(I(f)'+I(g)'+I(h)'_2)/(I(f)'+I(g)'+I(h)'_2+I(i)'+I(j)'+I(k)')<0.23 \quad (3)$$

When the polyvinyl acetal resin satisfies the above expression (3), the fluidity, flexibility, and the like of the polyvinyl acetal resin at low temperatures tend to be good, and thermocompression bonding properties at low temperatures tend to be better. Therefore, the interlayer film for laminated glass produced using the polyvinyl acetal resin can be used to produce laminated glass by compression bonding the interlayer film for laminated glass onto a laminated glass member or a functional layer using a low-temperature autoclave or means other than an autoclave even more easily. That is, when laminated glass is produced by compression bonding an interlayer film for laminated glass onto a laminated glass member or functional layer using a low-temperature autoclave or means other than an autoclave, it is even easier to suppress a deterioration in the transparency of the laminated glass caused by residual air or embossments between the interlayer film for laminated glass and the laminated glass member or functional layer. From this viewpoint, the polyvinyl acetal resin according to the present invention more preferably satisfies the following formula (3-a), further preferably satisfies the following formula (3-b), and particularly preferably satisfies the following formula (3-c).

$$(I(f)'+I(g)'+I(h)'_2)/(I(f)'+I(g)'+I(h)'_2+I(i)'+I(j)'+I(k)')\leq 0.225 \quad (3\text{-}a)$$

$$(I(f)'+I(g)'+I(h)'_2)/(I(f)'+I(g)'+I(h)'_2+I(i)'+I(j)'+I(k)')\leq 0.222 \quad (3\text{-b})$$

$$(I(f)'+I(g)'+I(h)'_2)/(I(f)'+I(g)'+I(h)'_2+I(i)'+I(j)'+I(k)')\leq 0.220 \quad (3\text{-c})$$

The lower limit value of the range of the value of $(I(f)'+I(g)'+I(h)'_2)/(I(f)'+I(g)'+I(h)'_2+I(i)'+I(j)'+I(k)')$ in the polyvinyl acetal resin according to the present invention is not particularly limited, but is, for example, 0.10, preferably 0.15, and more preferably 0.17.

I(f)' is, for example, the integration value in the 64.0 to 64.8 ppm section of the peak attributed to the methine C atom at the position (f)' of the structural unit (f). Further, I(g)' is, for example, the integration value in the 65.8 to 66.6 ppm section of the peak attributed to the methine C atom at the position (g)' of the structural unit (g). In addition, $I(h)'_2$ is, for example, the integration value of the peak calculated using the following expression (4).
The peak attributed to the methine C atom at the position $(h)'_2$ of the structural unit (h) and the peak attributed to the methine C atom at the position $(h)'_1$ of the structural unit (e) are both present in the section of 66.6 to 70.0 ppm. Therefore, although the total of the integration values of $I(h)'_1$ and $I(h)'_2$ can be measured, it is difficult to measure only $I(h)'_2$. Accordingly, it is preferred to calculate $I(h)'_2$ using expression (4), which is described later. Further, I(i)' is, for example, the integration value in the 61.7 to 63.1 ppm section of the peak attributed to the methine C atom at the position (i)' of the structural unit (i). Moreover, I(j)' is, for example, the integration value in the 64.8 to 65.8 ppm section of the peak attributed to the methine C atom at the position (j)' of the structural unit (j). In addition, I(k)' is, for example, the integration value in the 63.1 to 64.0 ppm section of the peak attributed to the methine C atom at the position (k)' of the structural unit (k).

$$I(h)'_2=(I(h)'_1+I(h)'_2)-I(l)'\times(I(e)'\div I(d)') \quad (4)$$

In expression (4), $I(h)'_1$ is the integration value of the peak attributed to the methine C atom at the position $(h)'_1$ of the structural unit (e). The value of $(I(h)'_1+I(h)'_2)$ is the integration value of the peak present in the section of 66.6 to 70.0 ppm. I(l)' is, for example, the integration value in the 71.0 to 74.5 ppm section at the position of the peak attributed to the methine C atom at the position (l)' of the structural unit (d). As described above, I(d)' is, for example, the integration value of the 98.5 to 101.4 ppm section of the peak attributed to the methine C atom at the position (d)' of the structural unit (d). Further, I(e)' is, for example, the integration value of the 92.5 to 94.5 ppm section of the peak attributed to the methine C atom at the position (e)' of the structural unit (e).

The value of $(I(f)'+I(g)'+I(h)'_2)/(I(f)'+I(g)'+I(h)'_2+I(i)'+I(j)'+I(k)')$ in the polyvinyl acetal resin indicates the proportion of three-chain hydroxyl groups in the polyvinyl acetal resin. It is thought that by reducing the proportion of three-chain hydroxyl groups in the polyvinyl acetal resin, the flexibility and fluidity of the polyvinyl acetal resin are enhanced, and thermocompression bonding properties at low temperatures are enhanced.

The value of $(I(f)'+I(g)'+I(h)'_2)/(I(f)'+I(g)'+I(h)'_2+I(i)'+I(j)'+I(k)')$ in the polyvinyl acetal resin according to the present invention can be adjusted by adjusting the production conditions when producing the polyvinyl acetal resin. Specifically, as described later, the above-described value can be adjusted by adjusting the aging temperature in the aging process performed when producing the polyvinyl acetal resin. For example, by setting the aging temperature to a relatively low temperature, it is thought that the transition of the polyvinyl acetal resin from a racemo type structure to a meso type structure is suppressed, and as a result, the hydroxyl groups in the polyvinyl acetal resin are present in a random manner, which is thought to cause the value of $(I(f)'+I(g)'+I(h)'_2)/(I(f)'+I(g)'+I(h)'_2+I(i)'+I(j)'+I(k)')$ to be lower. Further, it is thought that the generation of three-chain hydroxyl groups in the polyvinyl acetal resin is suppressed, causing the above value to be smaller.

Examples of the $R^1$ to $R^9$ in the above formulas (b) to (e), (i), (j) and (k) include an n-propyl group, an isopropyl group, an n-butyl group, a 1-ethylpropyl group, an n-pentyl group, an n-heptyl group, an n-octyl group, an n-nonyl group, hydrogen, a methyl group, and an aryl group. Among these, an alkyl group having about 1 to 6 carbon atoms, such as an n-propyl group, an n-butyl group, and an n-pentyl group, are preferred, and an n-propyl group is more preferred. Therefore, a polyvinyl butyral resin is suitable for the polyvinyl acetal resin.

(Degree of acetalization)

The polyvinyl acetal resin according to the present invention has a degree of acetalization of 65 mol% or more and less than 75 mol%. If the degree of acetalization of the polyvinyl acetal resin is less than 65 mol%, the number of hydroxyl groups in the polyvinyl acetal resin increases, and, moreover, the distribution of hydroxyl groups is less likely to be random and the flexibility of the polyvinyl acetal resin may be insufficient. Further, if the degree of acetalization is 75 mol% or more, adhesive properties to glass and the like decreases, and it may be more difficult to enhance thermocompression bonding properties. Therefore, if the degree of acetalization is not in the above range, when laminated glass is produced by

compression bonding an interlayer film for laminated glass onto a laminated glass member or functional layer using a low-temperature autoclave or means other than an autoclave, air or embossments may remain between the interlayer film for laminated glass and the laminated glass member or functional layer, resulting in a deterioration in the transparency of the laminated glass.

From this viewpoint, the polyvinyl acetal resin according to the present invention preferably has a degree of acetalization of 67 mol or more and 74 mol or less, more preferably 68 mol or more and 73 mol or less, and further preferably 69 mol or more and 72 mol or less.

As used herein, "degree of acetalization" means the degree of butyralization when the acetal group is a butyral group and the polyvinyl acetal resin (A) is a polyvinyl butyral resin.

The degree of acetalization is a value expressed as a percentage of the mole fraction calculated by subtracting the amount of ethylene groups to which hydroxyl groups are bonded and the amount of ethylene groups to which acetyl groups are bonded from the total amount of ethylene groups in the main chain, and dividing that value by the total amount of ethylene groups. The degree of acetalization (degree of butyralization) may be calculated based on the amount of ethylene groups to which hydroxyl groups are bonded and the amount of ethylene groups to which acetyl groups are bonded, which are determined by the procedure described in the Examples.

(Weight-average molecular weight)

The polyvinyl acetal resin according to the present invention preferably has a weight-average molecular weight (Mw) of 220000 or more. When the weight-average molecular weight (Mw) of the polyvinyl acetal resin is 220000 or more, it is possible to suppress the formation of air bubbles at the peripheral portion of the interlayer film for laminated glass during compression bonding of the interlayer film for laminated glass produced using the polyvinyl acetal resin. If air bubbles form at the peripheral portion of the interlayer film for laminated glass during compression bonding, defects occur in the appearance of the laminated glass. From this viewpoint, the polyvinyl acetal resin according to the present invention has a weight-average molecular weight (Mw) of more preferably 230000 or more, and further preferably 240000 or more. Moreover, the polyvinyl acetal resin according to the present invention preferably has a weight-average molecular weight (Mw) of 310000 or less. When the weight-average molecular weight (Mw) of the polyvinyl acetal resin is 310000 or less, the interlayer film for laminated glass produced using the polyvinyl acetal resin has sufficient flexibility. From this viewpoint, the polyvinyl acetal resin according to the present invention has a weight-average molecular weight (Mw) of more preferably 305000 or less, and further preferably 300000 or less.

The weight-average molecular weight (Mw) of the polyvinyl acetal resin is measured by gel permeation chromatography.

(Aldehyde)

The polyvinyl acetal resin according to the present invention is preferably a polyvinyl acetal resin obtained by acetalizing a polyvinyl alcohol (PVA) with an aldehyde.

The aldehyde is not particularly limited, but generally it is preferred to use an aldehyde having from 1 to 10 carbon atoms. Examples of the aldehyde having from 1 to 10 carbon atoms include, but are not particularly limited to, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used alone or in combination of two or more.

Among the above, n-butyraldehyde, n-hexylaldehyde, and n-valeraldehyde are preferred, and n-butyraldehyde is more preferred. Therefore, a polyvinyl butyral resin is suitable for the polyvinyl acetal resin.

(Polyvinyl alcohol (PVA))

The polyvinyl alcohol (PVA) can be obtained, for example, by saponifying a polyvinyl ester such as a polyvinyl acetate. The degree of saponification of the polyvinyl alcohol is generally 70 to 99.9 mol%.

The average degree of polymerization of the PVA is preferably 200 or more, more preferably 500 or more, further preferably 1000 or more, and still further preferably 1500 or more. When the average degree of polymerization is equal to or higher than the above lower limit, the penetration resistance of laminated glass is increased when used in laminated glass. Further, the average degree of polymerization of the PVA is preferably 5000 or less, more preferably 4000 or less, further preferably 3500 or less, and still further preferably 2500 or less.

The average degree of polymerization of the polyvinyl alcohol is determined by a method in accordance with JIS K6726 "Testing method for polyvinyl alcohol." Further, when two or more types of polyvinyl alcohols are used as the raw material, the average degree of polymerization of the polyvinyl alcohol can be estimated by calculating the average degree of polymerization of each polyvinyl alcohol.

Two or more types of polyvinyl alcohols having different average degrees of polymerization may be used as the raw material for the polyvinyl acetal resin. In this case, it is preferred to produce the polyvinyl acetal resin based on the production method described below using a mixture of two or more types of polyvinyl alcohol as the raw material.

When using two or more types of polyvinyl alcohols, it is preferable to use, for example, a first polyvinyl alcohol having an average degree of polymerization of 1500 or more and a second polyvinyl alcohol having an average degree of polymerization of 1000 or less. By using two or more types of polyvinyl alcohols having different average degrees of polymerization, it is easier to increase the amount of change in thickness, which is described later.

The average degree of polymerization of the first polyvinyl alcohol is preferably 1500 or more and 3500 or less, more preferably 1600 or more and 2500 or less, and further preferably 1600 or more and 2000 or less. Further, the average degree of polymerization of the second polyvinyl alcohol is preferably 200 or more and 1000 or less, more preferably 300 or more and 900 or less, and further preferably 400 or more and 700 or less.

When using the first and second polyvinyl alcohols, the blending ratio of the first polyvinyl alcohol and the second polyvinyl alcohol is not particularly limited, but the blending amount of the second polyvinyl alcohol with respect to the total amount of the first and second polyvinyl alcohols is preferably 1% by mass or more and 50% by mass or less, more preferably 2% by mass or more and 40% by mass or less, further preferably 3% by mass or more and 30% by mass or less, and still further preferably 5% by mass or more and 15% by mass or less.

(Amount of hydroxyl groups)

The amount of hydroxyl groups in the polyvinyl acetal resin according to the present invention is preferably 15 mol% or more, and preferably 38 mol% or less. By setting the amount of hydroxyl groups to 15 mol % or more, adhesive properties tends to be better, and when used in laminated glass, the penetration resistance of the laminated glass tends to be better. Further, by setting the amount of hydroxyl groups to 38 mol% or less, flexibility tends to be ensured, and it is possible to prevent the laminated glass from becoming too hard and the amount of change in thickness, which is described later, from decreasing.

The amount of hydroxyl groups is more preferably 20 mol% or more, and further preferably 25 mol% or more. Further, the amount of hydroxyl groups is more preferably 35% or less, and further preferably 33 mol% or less.

When a polyvinyl butyral resin is used as the polyvinyl acetal resin, from the same viewpoint, the amount of hydroxyl groups is 15 mol% or more, preferably 38 mol% or less, more preferably 20 mol% or more, further preferably 25 mol% or more, more preferably 35% mol or less, and further preferably 33 mol% or less.

The amount of hydroxyl groups in the polyvinyl acetal resin is a value expressed as a percentage of the mole fraction calculated by dividing the amount of ethylene groups to which hydroxyl groups are bonded by the total amount of ethylene groups in the main chain.

The amount of ethylene groups to which the above hydroxyl groups are bonded can be measured by the procedure described in the Examples.

(Degree of acetylation)

The polyvinyl acetal resin according to the present invention has a degree of acetylation of preferably 30 mol% or less, more preferably 20 mol% or less, further preferably 10 mol% or less, and still further preferably 2 mol% or less. When the degree of acetylation is equal to or lower than the upper limit, the moisture resistance of a polymer film increases. Further, the degree of acetylation is, although not particularly limited to, preferably 0.01 mol% or more, and more preferably 0.1 mol% or more.

The degree of acetylation is a value expressed as a percentage of the mole fraction calculated by dividing the amount of ethylene groups to which acetyl groups are bonded by the total amount of ethylene groups in the main chain. The amount of ethylene groups to which acetyl groups are bonded can be measured by the procedure described in the Examples.

(Modified polyvinyl acetal resin)

The polyvinyl acetal resin according to the present invention is preferably an unmodified polyvinyl acetal resin, but may be a modified polyvinyl acetal resin.

A modified polyvinyl acetal resin has a structure (modifying group) other than an acetal group, a hydroxyl group, or an acetyl group, and preferably has a modifying group in a side chain. Examples of the modifying group include a group having a polyalkylene oxide structure in a side chain, and a group having an alkyl group (of about 2 to 30 carbon atoms, for example) other than an acetal group or an acetyl group in the side chain.

The level of modification is not particularly limited, but is, for example, 0.1 mol% or more to about 10 mol%. As used herein, "level of modification" refers to the ratio of functional groups to all vinyl monomer units constituting the

polyvinyl acetal resin.

(Method for producing polyvinyl acetal resin)

The polyvinyl acetal resin according to the present invention is preferably produced by a production method that includes a mixing process of mixing the polyvinyl alcohol and the aldehyde, and an aging process of aging the mixture obtained in the mixing process.

In the mixing process, the polyvinyl alcohol and the aldehyde may be mixed according to a conventional method. Further, in addition to the polyvinyl alcohol and the aldehyde, a catalyst such as an acid catalyst may be further added to catalyze the acetalization reaction. For example, the aldehyde may be added to a mixture of the polyvinyl alcohol and an acid catalyst at a low temperature of about 0 to 40°C. Additionally, a solvent such as water is usually added. Further, when using two or more types of polyvinyl alcohols in combination (for example, when using two or more types of polyvinyl alcohols having different molecular weights), it is preferred to mix the two or more types of polyvinyl alcohols with the aldehyde.

The aging process is not particularly limited, but for example, may be carried out by adding a catalyst such as an acid catalyst to the mixture (reaction mixture) obtained in the mixing process, heating to the aging temperature, and holding at the aging temperature for a certain period of time. In the present production method, the polyvinyl acetal resin is obtained through the acetalization of the polyvinyl alcohol progresses in the mixing process and aging process.

After the reaction mixture is held at the above-described aging temperature for a certain period of time, the reaction mixture is appropriately cooled and neutralized, and may then be optionally washed with water, dried, and the like.

Examples of the acid catalyst added in the mixing process and the aging process include inorganic acids such as hydrochloric acid, nitric acid, phosphoric acid, and boric acid. Further, in the aging process, it is preferred to adjust the concentration of the acid catalyst to, for example, 0.5% by mass or more and 5% by mass or less, and preferably 1% by mass or more and 2.5% by mass or less.

The aging temperature in the aging process may be a relatively low temperature, for example, 30°C or higher and 65°C or lower, preferably 35°C or higher and 60°C or lower, and more preferably 40°C or higher and 58°C or lower. Further, the duration of holding at the above aging temperature (aging time) may be longer than the certain period of time, for example, 75 minutes or more and 180 minutes or less, preferably 90 minutes or more and 150 minutes or less, and more preferably 100 minutes or more and 140 minutes or less.

It is estimated that if the aging temperature and aging time are within the above desired ranges, the hydroxyl groups in the polyvinyl acetal resin are more likely to be uniformly distributed in the molecule, and as a result, the polyvinyl acetal resin according to the present invention will tend to satisfy the requirement of above expression (1).

<Interlayer film for laminated glass>

The interlayer film for laminated glass according to the present invention has a single-layer structure or a multilayer structure, and includes at least a polyvinyl acetal resin layer containing the polyvinyl acetal resin according to the present invention.

(Polyvinyl acetal resin layer)

As described above, the polyvinyl acetal resin layer contains the polyvinyl acetal resin according to the present invention. The content of the polyvinyl acetal resin in the polyvinyl acetal resin layer is, for example, with respect to the total amount of the thermoplastic resin contained in the polyvinyl acetal resin layer, 50% by mass or more, preferably 70% by mass or more, more preferably 90% by mass or more, and most preferably 100% by mass. Therefore, the thermoplastic resin contained in the polyvinyl acetal resin layer may consist of an only polyvinyl acetal resin.

The polyvinyl acetal resin layer may contain a thermoplastic resin other than the polyvinyl acetal resin according to the present invention as long as the effects of the present invention are achieved. Examples of the thermoplastic resin other than the polyvinyl acetal resin according to the present invention include a (meth)acrylic resin, a polyvinyl acetal resin other than the polyvinyl acetal resin according to the present invention, a polyvinyl alcohol resin (PVA), a polyurethane resin (PU), an ethylene-vinyl acetate copolymer resin (EVA), a saponified ethylene-vinyl acetate copolymer (EVOH), an ethylene-methacrylic acid copolymer resin, an ionomer resin, an isobutylene resin, a styrene-isoprene copolymer resin, and a styrene-butadiene copolymer resin. These thermoplastic resins may be used alone or in combination of two or more.

Among the above-described thermoplastic resins other than the polyvinyl acetal resin according to the present invention, from the viewpoint of achieving both moist heat resistance and impact resistance, a polyvinyl acetal resin other than the polyvinyl acetal resin according to the present invention, a polyurethane resin (PU), an ethylene-vinyl acetate copolymer resin (EVA), a saponified ethylene-vinyl acetate copolymer (EVOH), an ethylene-methacrylic acid copolymer resin, an ionomer resin, an isobutylene resin, a styrene-isoprene copolymer resin, or a styrene-butadiene copolymer resin

is preferred.

The polyvinyl acetal resin layer preferably has an amount of change in thickness of 80 μm or more when compressed according to a compressive creep test conducted under the following conditions.

(Compressive creep test)

Firstly, a test sample having a diameter of 8 mm and a thickness of 700 to 900 μm (for example, 800 μm) is produced from a polyvinyl acetal resin layer. Next, the test sample is compressed for 30 minutes under a load of 410 g and a temperature of 30°C, a thickness (T1) of the test sample is then measured, the temperature is then increased from 30°C to 90°C at a heating rate of 6°C/min while maintaining the load of 410 g, the test sample is compressed for 5 minutes under the load of 410 g and temperature of 90°C, a thickness (T2) of the test sample is then measured, and an absolute value of a difference between the thickness (T1) and the thickness (T2) of the test sample is taken as the amount of change in thickness.

When the thickness of the polyvinyl acetal resin layer is less than 700 μm, the test sample may be produced by stacking two or more polyvinyl acetal resin layers, compression bonding the stack using heat pressing as appropriate, adjusting the thickness with a press or the like to between 700 and 900 μm, and then cutting, for example, into a cylindrical shape having a diameter of 8 mm.

In addition, when the thickness of the polyvinyl acetal resin layer is more than 900 μm, the test sample may be produced by adjusting the thickness to between 700 and 900 μm using hot pressing as necessary, and then cutting, for example, into a cylindrical shape having a diameter of 8 mm.

When the interlayer film for laminated glass has a multilayer structure, the polyvinyl acetal resin layer is removed by peeling the polyvinyl acetal resin layer from other layers. In addition, when the interlayer film for laminated glass has a multilayer structure and an intermediate layer is a polyvinyl acetal resin layer, only the skin layer is peeled off to produce a test sample having an after-pressing film thickness of 700 to 900 μm with just the skin layer.

Further, if the surface of the test sample has unevenness such as embossments, the test sample may be produced, for example, by heat-pressing the test sample as appropriate so that the surface becomes flat, and then cutting into a cylindrical shape having a diameter of 8 mm.

If the polyvinyl acetal resin layer has the above-described amount of change in thickness of 80 μm or more, when laminated glass is produced by compression bonding an interlayer film for laminated glass onto a laminated glass member or functional layer using a low-temperature autoclave or means other than an autoclave, it is possible to suppress residual air or embossments between the interlayer film for laminated glass and the laminated glass member or functional layer.

From this viewpoint, the amount of change in thickness of the polyvinyl acetal resin layer is more preferably 90 μm or more, further preferably 100 μm or more, and still further preferably 110 μm or more. When the amount of change in thickness increases in this way, the amount of air or embossments remaining during compression bonding can be further reduced, and the transparency of the laminated glass can be enhanced.

The amount of change in thickness of the polyvinyl acetal resin layer is, for example, 600 μm or less, preferably 550 μm or less, more preferably 500 μm or less, and further preferably 450 μm or less. By setting the amount of change in thickness to a certain value or less, it is possible to further suppress the formation of air bubbles at the peripheral portion of the interlayer film for laminated glass during compression bonding.

The amount of change in thickness can be adjusted, for example, by adjusting the polyvinyl acetal resin contained in the polyvinyl acetal resin layer. The amount of change in thickness can be further adjusted by adjusting the amount, type, and the like of the plasticizer contained in the polyvinyl acetal resin layer. For example, increasing the amount of plasticizer tends to increase the amount of change in thickness.

(Plasticizer)

It is preferred that the polyvinyl acetal resin layer contains a plasticizer. By containing a plasticizer, the polyvinyl acetal resin layer becomes more flexible, and the adhesive properties of the polyvinyl acetal resin layer to various adherends, penetration resistance, and the like can be further enhanced. In addition, it is easier to increase the amount of change in thickness.

Examples of the plasticizer include an organic ester plasticizer, an organic phosphorus plasticizer such as an organic phosphate ester plasticizer and an organic phosphite plasticizer, an organic ether plasticizer such an as polyalkylene glycol plasticizer, and an alcohol plasticizer.

One type of plasticizer may be used alone, or two or more types may be used in combination. Among the above, an organic ester plasticizer or an organic ether plasticizer is preferred.

Preferred examples of the organic ester plasticizer include a monobasic organic acid ester and a polybasic organic acid ester. Examples of the monobasic organic acid ester include an ester of a glycol and a monobasic organic acid. Examples of the glycol include a polyalkylene glycol in which each alkylene unit has from 2 to 4 carbon atoms,

preferably 2 or 3 carbon atoms, and the number of repeating alkylene units is from 2 to 10, preferably from 2 to 4. Further, the glycol may be a monoalkylene glycol having from 2 to 4 carbon atoms, preferably 2 or 3 carbon atoms (that is, has one repeating unit).

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having from 3 to 10 carbon atoms, specifically, butyric acid, isobutyric acid, caproic acid, 2-ethylbutyric acid, heptylic acid, n-octylic acid, 2-ethylhexylic acid, n-nonylic acid, and decyl acid.

Examples of specific monobasic organic acids include triethylene glycol di-2-ethyl butyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapreate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, and 1,2-butylene glycol di-2-ethylbutyrate.

Examples of the polybasic organic acid ester include an ester compound of a dibasic organic acids having from 4 to 12 carbon atoms, such as adipic acid, sebacic acid, and azelaic acid, and an alcohol having from 4 to 10 carbon atoms. The alcohol having from 4 to 10 carbon atoms may be a straight chain, or may have a branched structure or a cyclic structure.

Specific examples of the polybasic organic acid ester include dibutyl sebacate, dioctyl azelaate, dihexyl adipate, dioctyl adipate, hexylcyclohexyl adipate, diisononyl adipate, heptylnonyl adipate, dibutyl carbitol adipate, and a mixed type adipate ester. Alternatively, an oil-modified sebacic acid alkyd and the like may be used. Examples of the mixed adipate ester include an adipate ester produced from two or more alcohols selected from the group consisting of alkyl alcohols having from 4 to 9 carbon atoms and cyclic alcohols having from 4 to 9 carbon atoms.

The organic ester plasticizer is not limited to a complete ester of the above-described each ester, but may also be a partial ester. For example, the organic ester plasticizer may be a partial ester of a glycol and a monobasic organic acid, or a partial ester of a dibasic organic acid and an alcohol. Specific examples include triethylene glycol-mono-2-ethylhexanoate and the like.

Further, the organic ester plasticizer may be, for example, a partial ester of a trihydric or higher alcohol such as glycerin and a monobasic organic acid. Examples of the monobasic organic acid include a monobasic organic acid having from 3 to 24 carbon atoms, and preferably from 6 to 18 carbon atoms. Specific examples of a partial ester of a trihydric or higher alcohol and a monobasic organic acid include a mono- or diester of glycerin and stearic acid, and a mono- or diester of glycerin and 2-ethylhexylic acid.

Among the above-described organic ester plasticizers, it is particularly preferred to use triethylene glycol-di-2-ethylhexanoate (3GO).

Examples of the organic phosphorus plasticizer include a phosphate ester such as tributoxyethyl phosphate, isodecylphenyl phosphate, and triisopropyl phosphate.

Examples of the polyalkylene glycol plasticizer include a polyoxyalkylene compound having a polyoxyalkylene structure, specifically, a polyhydric alcohol compound such as a glycol, an ester compound of a glycol and a monobasic organic acid or polybasic organic acid, and an ether compound of a monohydric or polyhydric alcohol and a polyoxyalkylene. Here, examples of the glycol include a polyoxyalkylene glycol or derivatives thereof. Examples of the polyoxyalkylene include polyoxyethylene, polyoxypropylene, polyoxybutylene, a random copolymer or block copolymer thereof. As described above, the polyoxyalkylene compound may be a polyhydric alcohol compound, an ester compound, an ether compound, or a compound other than these.

Examples of the polyoxyalkylene compound include polyoxyalkylene or derivatives thereof. More specifically, examples of the polyoxyalkylene compound include a polyoxyalkylene glycol constituted of the above-described polyoxyalkylene, and an ether compound of a polyoxyalkylene and a polyhydric alcohol. **In** those compounds, all of the terminals may be hydroxyl groups, or those compounds may be a derivative in which a part or all of the hydrogen atoms in a terminal hydroxyl group are substituted with an alkyl group or an acyl group. The number of carbon atoms of the alkyl groups or acyl groups is not particularly limited, but may be about 1 to 8, and preferably from 1 to 4.

Examples of the polyoxyalkylene glycol include a polyoxyethylene polyoxypropylene glycol such as polyethylene glycol (polyoxyethylene glycol), polypropylene glycol (polyoxypropylene glycol), a poly(ethylene oxide/propylene oxide) block copolymer, and a poly(ethylene oxide/propylene oxide) random copolymer, and a polyoxybutylene glycol such as polytetramethylene glycol.

Examples of the ether compounds of a polyoxyalkylene and a polyhydric alcohol include an ether compound of a polyhydric alcohol such as glycerol, diglycerol, trimethylolpropane, erythritol, pentaerythritol, and bisphenol A and a polyoxyalkylene. Specific examples of the ether compounds of a polyoxyalkylene and a polyhydric alcohol include

polyoxyethylene glyceryl ether, polyoxypropylene glyceryl ether, polyoxyethylene diglyceryl ether, polyoxypropylene diglyceryl ether, and polyoxyalkylene pentaerythritol ether. Further, examples of a derivative in which a part or all of the hydrogen atoms in a terminal hydroxyl group are substituted with an alkyl group or an acyl group include a derivative in which a part or all of the hydrogen atoms in a terminal hydroxyl group of the above-described polyoxyalkylene glycol or ether compound are substituted with an alkyl group or an acyl group. Specific examples of the derivative include polyoxyethylene glycol monomethyl ether, polyoxyethylene glycol dimethyl ether, polyoxypropylene glycol monomethyl ether, polyoxypropylene glycol dimethyl ether, polyoxyethylene polyoxypropylene glycol monomethyl ether, polyoxyethylene polyoxypropylene glycol dimethyl ether, polyoxyethylene glycol monobutyl ether, polyoxypropylene glycol monobutyl ether, and polyoxyethylene polyoxypropylene monobutyl ether.

Among the above polyoxyalkylene compounds, a compound having a polyoxyethylene, polyoxypropylene, or polyoxyethylene polyoxypropylene structure are preferred, and among them, a compound having a polyoxypropylene or polyoxyethylene polyoxypropylene structure is more preferred. Specifically, polyoxyethylene polyoxypropylene glycol, polyoxypropylene glyceryl ether, polyoxypropylene diglyceryl ether, or a derivative of these in which a part of the hydrogen atoms of a terminal hydroxyl group is substituted with an alkyl group are preferred.

Examples of the alcohol-based plasticizer include various polyhydric alcohols such as butanediol, hexanediol, trimethylolpropane, and pentaerythritol. Among these, trimethylolpropane is preferred.

The above-described plasticizers can be used alone or in combination of two or more. Among the plasticizers described above, triethylene glycol-di-2-ethylhexanoate (3GO), polyoxyethylene polyoxypropylene glycol, polyoxypropylene glyceryl ether, polyoxypropylene diglyceryl ether, or a derivative of these in which a part of the hydrogen atoms of a terminal hydroxyl group is substituted with an alkyl group are preferred, and triethylene glycol-di-2-ethylhexanoate (3GO) is more preferred.

The content of the plasticizer in the polyvinyl acetal resin layer is not particularly limited, but is preferably 10 parts by mass or more and 100 parts by mass or less with respect to 100 parts by mass of the polyvinyl acetal resin. When the content of the plasticizer is 10 parts by mass or more, the polyvinyl acetal resin layer has appropriate flexibility, the adhesive properties of the polyvinyl acetal resin layer are good, and the penetration resistance of the laminated glass is good. In addition, it is easier to increase the amount of change in thickness.

On the other hand, when the content of the plasticizer is 100 parts by mass or less, separation of the plasticizer from the polyvinyl acetal resin layer is prevented. Further, it is also possible to prevent the amount of change in thickness from becoming too large.

The content of the plasticizer is more preferably 20 parts by mass or more, further preferably 25 parts by mass or more, and still further preferably 30 parts by mass or more, and is more preferably 70 parts by mass or less, further preferably 60 parts by mass or less, and still further preferably 50 parts by mass or less.

In addition to the plasticizer, the polyvinyl acetal resin layer may appropriately contain known additives used in combination with the polyvinyl acetal resin. That is, although the polyvinyl acetal resin layer may consist of an only polyvinyl acetal resin, or a polyvinyl acetal resin and a plasticizer, the polyvinyl acetal resin layer may also contain other additives other than these that are added as necessary.

Examples of additives other than a plasticizer specifically include an ultraviolet absorber, an infrared absorber, an antioxidant, a light stabilizer, an adhesive force regulator, a colorant (pigment or dye), an optical brightener, a crystal nucleating agent, and a lubricant.

<Colorant>

The thermoplastic resin layer (A) may or may not contain a colorant. By using the above-described colorant, the laminated glass can be suitably colored to have a desired color hue. The above-described colorants may be used alone or in combination of two or more. The thermoplastic resin layer (A) may contain only one type of colorant, may contain two or more types of colorant, may contain three or more types of colorant, may contain 10 or less types of colorant, or may contain 5 or less types of colorant.

Examples of the colorant include pigments and dyes. The colorant may be a pigment, a dye, or both a pigment and a dye. There are also colorants that are classified as both a pigment and a dye.

Pigment:

The colorant may contain, or be, a pigment. The thermoplastic resin layer (A) may or may not contain a pigment. The above-described pigments may be used alone or in combination of two or more. The thermoplastic resin layer (A) may contain only one type of pigment, may contain two or more types of pigment, may contain three or more types of pigment, may contain 10 or less types of pigment, or may contain 5 or less types of pigment.

Examples of the pigment include a perylene compound, a threne compound, a quinacridone compound, a diketopyrrolopyrrole compound, an anthraquinone compound, a perinone compound, a phthalocyanine compound, an

indanthrene compound, an indigo compound, an isoindolinone compound, a nickel complex compound, a methine compound, an azomethine compound, a dioxazine, an azo compound, and a carbon black.

When the thermoplastic resin layer (A) contains a pigment, the content of the pigment in 100% by mass of the thermoplastic resin layer (A) is preferably 0.0001% by mass or more, more preferably 0.01% by mass or more, and further preferably is 0.02% by mass or more, and is preferably 0.15% by mass or less, and more preferably 0.12% by mass or less. When the content of the pigment is equal to or more than the above lower limit and equal to or less than the above upper limit, the effects of the present invention can be exhibited even more effectively.

Dye:

The colorant may contain, or be, a dye. The thermoplastic resin layer (A) may or may not contain a dye. The above-described dyes may be used alone or in combination of two or more. The thermoplastic resin layer (A) may contain only one type of dye, may contain two or more types of dye, may contain three or more types of dye, may contain 10 or less types of dye, or may contain 5 or less types of dye.

Examples of the dye include a perylene compound, a threne compound, a quinacridone compound, a diketopyrrolopyrrole compound, an anthraquinone compound, a perinone compound, a phthalocyanine compound, an indanthrene compound, an indigo compound, an isoindolinone compound, a nickel complex compound, a methine compound, an azomethine compound, a dioxazine, and an azo compound.

When the thermoplastic resin layer (A) contains a dye, the content of the dye in 100% by mass of the thermoplastic resin layer (A) is preferably 0.00001% by mass or more, more preferably 0.0001% by mass or more, and further preferably 0.001% by mass or more, and is preferably less than 0.015% by mass, and more preferably 0.01% by mass or less. When the content of the dye is equal to or more than the above lower limit and equal to or less than the above upper limit (or less than the above upper limit), the effects of the present invention can be exhibited even more effectively.

When the thermoplastic resin layer (A) contains a colorant, the content of the colorant in 100% by mass of the thermoplastic resin layer (A) is preferably 0.00001% by mass or more, more preferably 0.0001% by mass or more, and further preferably 0.001% by mass or more, and is preferably 0.15% by mass or less, and more preferably 0.12% by mass or less. When the content of the colorant is equal to or more than the above lower limit and equal to or less than the above upper limit (or less than the above upper limit), the effects of the present invention can be exhibited even more effectively.

The thickness of the polyvinyl acetal resin layer is not particularly limited, but is, for example, 100 μm or more and 2000 μm or less, preferably 150 μm or more and 1300 μm or less, and more preferably 200 μm or more and 1000 μm or less. When the thickness of the polyvinyl acetal resin layer is equal to or more than the above lower limit value, impact resistance can be enhanced and adhesion with the laminated glass members and the like is also easily ensured. On the other hand, when the thickness of the polyvinyl acetal resin layer is equal to or less than the above upper limit value, it is possible to prevent the thickness of the laminated glass from being thicker than necessary.

As described above, the interlayer film for laminated glass according to the present invention has a single layer structure or a multilayer structure. When the interlayer film for laminated glass according to the present invention has a multilayer structure, some of the layers may be polyvinyl acetal resin layers, or all of the layers may be polyvinyl acetal resin layers. Moreover, in the case of a multilayer structure, it is preferred that either one of the outermost layers of the interlayer film for laminated glass is a polyvinyl acetal resin layer, and more preferred that both of the outermost layers are polyvinyl acetal resin layers. When both outer layers are polyvinyl acetal resin layers, it is easier to suppress residual air or embossments during compression bonding onto the laminated glass members and the like. On the other hand, in the case of a single layer structure, the interlayer film for laminated glass may be composed of a single layer of the above-described polyvinyl acetal resin layer.

When the interlayer film for laminated glass has a two-layer structure, for example, either one of the layers may be a polyvinyl acetal resin layer, but it is preferred that both layers are polyvinyl acetal resin layers.

Further, when the interlayer film for laminated glass has a three-layer structure having two outermost layers and a middle layer, it suffices that either one of the two outermost layers is a polyvinyl acetal resin layer. However, it is preferred that both of the outermost layers are polyvinyl acetal resin layers. In this case, the middle layer may be composed of a polyvinyl acetal resin layer, but may also be composed of a material other than the polyvinyl acetal resin layer.

In addition, the interlayer film for laminated glass may have a structure of four or more layers having two outermost layers and two or more middle layers. In this case, although it suffices that either one of the two outermost layers is a polyvinyl acetal resin layer, it is preferred that both of the outermost layers are polyvinyl acetal resin layers. Moreover, each middle layer may be composed of a polyvinyl acetal resin layer, but may also be composed of a layer other than the polyvinyl acetal resin layer.

Further, when the interlayer film for laminated glass according to the present invention has a plurality of polyvinyl acetal resin layers, the polyvinyl acetal resin layers may have the same structure or different structures. For example, in the plurality of polyvinyl acetal resin layers, the type and content of the polyvinyl acetal resin constituting each layer may be the

same or different.

Further, when the interlayer film for laminated glass has a layer other than a polyvinyl acetal resin layer, such layer may be a thermoplastic resin layer other than a polyvinyl acetal resin layer. The type of the thermoplastic resin used in the thermoplastic resin layer other than a polyvinyl acetal resin layer is not particularly limited, but may be appropriately selected and used from among the resins listed as examples of the thermoplastic resin that can be used for the polyvinyl acetal resin layer. The types of resins that can be suitably used are also the same, and therefore it is particularly preferred to use a polyvinyl acetal resin.

**In** the interlayer film for laminated glass, the thickness of the polyvinyl acetal resin layer(s) is not particularly limited, but it is preferred that the thickness accounts for a certain proportion or more of the total thickness of the interlayer film for laminated glass. Specifically, the proportion of the thickness of the polyvinyl acetal resin layer(s) may be, with respect to the total thickness of the interlayer film for laminated glass, for example, 0.1 or more and 1 or less, and is preferably 0.3 or more and 1 or less, more preferably 0.5 or more and 1 or less, and further preferably 0.75 or more and 1 or less. Here, when there are two or more polyvinyl acetal resin layers, "the thickness of the polyvinyl acetal resin layer" refers to the total thickness of the two or more polyvinyl acetal resin layers. By containing the polyvinyl acetal resin layer(s) in the interlayer film for laminated glass at a certain thickness proportion or more, it is easier to suppress residual air or embossments during compression bonding and to suppress the formation of air bubbles at the peripheral portion.

The specific thickness of each polyvinyl acetal resin layer is not particularly limited, but is, for example, 50 μm or more and 1500 μm or less, preferably 100 μm or more and 1000 μm or less, and more preferably 150 μm or more and 900 μm or less. When the polyvinyl acetal resin layer has a thickness equal to or more than a certain level, it is easier to suppress residual air or embossments during compression bonding. Further, by setting the thickness to a certain level or less, it is possible to prevent the laminated glass interlayer film from being thicker than necessary.

The method for producing the interlayer film for laminated glass is not particularly limited, and the interlayer film for laminated glass may be produced by a conventionally known method. For example, the interlayer film for laminated glass may be produced by extrusion molding, press molding, and the like, but extrusion molding is preferred.

Further, the interlayer film for laminated glass may have uneven shapes on one or both surfaces. The method for forming the uneven shapes is not particularly limited, and examples of the method include a lip embossments method, an embossments roll method, and a calender roll method.

<Laminated body>

The laminated body according to the present invention includes the interlayer film for laminated glass according to the present invention and a functional layer different from the interlayer film for laminated glass according to the present invention. By using the interlayer film for laminated glass according to the present invention having a polyvinyl acetal resin layer, the laminated body according to the present invention eliminates the need to use an autoclave process under high-temperature and high-pressure conditions when incorporating a functional layer in the laminated glass and the like, and thus it is possible to prevent the functionality of the functional layer from being lost. It is preferred that the functional layer is arranged between a pair of the interlayer films for laminated glass according to the present invention. However, the functional layer may be arranged between an interlayer film for laminated glass according to the present invention and a laminated glass interlayer film other than the interlayer film for laminated glass according to the present invention described above. **In** addition, the layer structure of the laminated body is not limited to a structure in which the functional layer is arranged between a pair of interlayer films for laminated glass, and can take various forms as described below.

(Functional layer)

The functional layer used in the laminated body according to the present invention is not particularly limited as long as it has a certain function. For example, a functional film can be used as the functional layer used in the laminated body according to the present invention. The functional film may be a light control film, a display element film, or an optical film such as a polarizing film, a retardation film, an antireflection film, a heat-ray reflective film, a visible-light reflective film, and a solar cell film. Further, the functional film may be a film that imparts a sealing function to the laminated body. **In** addition, the laminated body may be used as a sealing material. Moreover, a solar cell element can also be used as the functional layer.

Further, among the above-described functional films, it is preferred that the functional film is a film having electronic components, for example, a light control film or a display element film. Films having electronic components tend to deteriorate or lose functionality when integrated in an autoclave under high-temperature and high-pressure conditions. However, according to the present invention, because the interlayer film for laminated glass does not need to be compression-bonded onto the functional layer in an autoclave process under high-temperature and high-pressure conditions, it is possible to incorporate the functional layer into the laminated glass and the like without losing the functionality of the functional layer. Therefore, even films having electronic components can be incorporated in the

laminated body in a manner that allows for practical use.

In addition, when laminated glass having either a light control film or a display element film is incorporated in various types of window glass, it is possible to provide window glass having a high added value, and so in the present invention it is desirable to use either one of those functional films as a functional layer.

A light control film is a film-like member that has a light control element. Specifically, the light control element is preferably the light control film including two resin films and a light control layer arranged between the two resin films. Therefore, the adhesive surface of the light control film with the thermoplastic resin layer is a resin material, and the adhesive strength to the polyvinyl acetal resin layer tends to be high. Examples of the resin film used in the light control element include, but are not particularly limited to, a polyester resin film such as a PET film and a PEN film, a (meth)acrylic resin film, a TAC film, a PES resin film, and a polyimide resin film. Among these, a polyester resin film is preferred from the viewpoint of handleability and the like, and of those a PET film is more preferred. In addition, a conductive layer constituting an electrode is provided on the surface on the light control layer side of each of the two resin films.

The visible light transmittance of the light control layer changes by switching between applying and not applying a voltage between the conductive layers of the two resin films. The light control layer may be composed of a liquid crystal layer such as a polymer dispersed liquid crystal (PDLC), and the light control film may be a PDLC film. Further, the light control film may be an SPD (Suspended Particle Device) film, an electrochromic film, an electrophoretic film device, a GHLC (Guest-Host Liquid Crystal) film, or the like. Therefore, the light control layer may be an SPD layer containing a resin matrix and a light control suspension dispersed in the resin matrix, or may be an electrochromic material layer. Alternatively, the light control layer may be, for example, an electrophoretic layer that contains electrophoretic particles and a dispersant that disperses the electrophoretic particles. Still further, the light control layer may be composed of host molecules and guest molecules.

A display element film is a film-like member that has a display element. Examples of the display element film include a film having a resin film and a display element mounted on the resin film. The display element film may include a pair of resin films and a display element provided therebetween. According to such a configuration, when the display element film is incorporated in the laminated glass by arranging it between a pair of interlayer films for laminated glass, the display element film can be adhered to the interlayer film for laminated glass with high adhesion. In addition, the resin film used for the display element film can be appropriately selected and used from among the resin films given as examples for the light control film.

Further, in the display element film as well, a conductive layer constituting an electrode may be provided on the surface on the display element side of the resin film. Examples of the display element include an organic EL element, an LED display, and a segment display, and among these, an organic EL element is preferred.

The functional film having electronic components is not limited to the above-described display element film and light control film, and may be another functional film. Although the electronic components may be mounted on a resin film in the same manner as the display element film or the light control film, a preferred aspect is one in which the electronic components are arranged between a pair of resin films.

By using a solar cell element in the functional layer, laminated glass for building-integrated photovoltaics (BIPV) can be provided.

The solar cell element is not particularly limited, and may be any solar cell element used in building-integrated photovoltaics (BIPV). Examples of the solar cell element include crystalline or thin-film silicon type solar cell elements; compound semiconductor type solar cell elements such as CIS, CIGS, CdTe, and GaAs; and an organic type solar cell elements such as dye sensitizers, organic thin films, and perovskites.

The laminated body can be produced by, for example, thermocompression bonding the functional layer and the interlayer film for laminated glass. Further, when incorporating a laminated body into laminated glass, the functional layer and the interlayer film for laminated glass are subjected to thermocompression bonding in advance to form a laminated body, and the laminated body is then compression bonded with the laminated glass members to form the laminated glass. In addition, in the process of arranging the functional layer before compression bonding and the interlayer film for laminated glass between the laminated glass members and compression bonding the laminated glass members and the interlayer film for laminated glass, the functional layer and the interlayer may also be subjected to compression bonding together.

<Laminated glass>

The laminated glass according to the present invention includes a first laminated glass member, a second laminated glass member, and the interlayer film for laminated glass according to the present invention or laminated body according to the present invention arranged between the first and second laminated glass members.

(First and second laminated glass members)

Examples of the first and second laminated glass members used in the laminated glass according to the present invention include a glass sheet. The glass sheet may be either an inorganic glass or an organic glass, but an inorganic glass is preferable. Examples of the inorganic glass include, but are not particularly limited to, clear glass, float glass, tempered glass, colored glass, polished glass, patterned glass, wired glass, lined glass, ultraviolet absorbing glass, infrared reflecting glass, infrared absorbing glass, and green glass.

Further, as the organic glass, a glass that is generally referred to as "resin glass" is used. Examples thereof include various organic glass sheets, such as a (meth)acrylic sheet such as a polycarbonate sheet and a polymethyl methacrylate sheet, an acrylonitrile styrene copolymer sheet, an acrylonitrile butadiene styrene copolymer sheet, a polyester sheet such as a polyethylene terephthalate sheet, a fluororesin sheet, a polyvinyl chloride sheet, a chlorinated polyvinyl chloride sheet, a polypropylene sheet, a polystyrene sheet, a polysulfone sheet, an epoxy resin sheet, a phenol resin sheet, an unsaturated polyester resin sheet, and a polyimide resin sheet. The organic resin sheet may be subjected to, for example, a surface treatment as appropriate.

The first and second laminated glass members may be composed of the same type of material or different materials. For example, one laminated glass member may be an inorganic glass and the other laminated glass member may be an organic glass, but it is preferred that the first and second laminated glass members are both an inorganic glass or organic glass.

Further, the thickness of each glass sheet used as the first and second laminated glass members is not particularly limited, but is, for example, about 0.1 to 15 mm, and preferably 0.5 to 5 mm. The thickness of each glass sheet may be the same or different.

The laminated glass members may be composed of a single glass sheet, or may be a glass sheet to which another member is attached. The laminated glass members may have various functions provided by attaching a functional member to the glass sheet.

The other member may be, for example, a member constituting an electronic device, an optical member, or the like, but is preferably a member constituting a display device. The display device may be a liquid crystal display device, an organic EL display device, an LED display device, a segment display device, or the like. Among these display devices, a liquid crystal display device is preferred.

The display device is preferably a display panel, for example, in which the glass sheet is used as a substrate and a display layer such as a liquid crystal layer or an organic EL layer, a light emitting element, and the like are provided on the substrate. The glass sheet that serves as the substrate for the display panel may be used as the laminated glass member.

In addition, although the functional layers such as a conductive layer that constitute a functional film described later, electrodes or sensors, an antireflection layer, a hard coat layer and the like may be laminated on the glass sheet, the laminated glass member may be a glass sheet on which such functional films or functional layers are laminated.

Therefore, the bonding surface with the interlayer film for laminated glass on which the interlayer film for laminated glass is directly laminated may be the glass sheet itself, or may also be the surface of the functional film or functional layer.

When two or more interlayer films for laminated glass are provided in the laminated body, as described above, although it is preferred that all the interlayer films for laminated glass are the interlayer film for laminated glass according to the present invention, it is acceptable if some of the interlayer films for laminated glass are an interlayer film other than the interlayer film for laminated glass according to the present invention. Further, another layer such as an adhesive layer may be provided as appropriate between the functional layer and the interlayer film for laminated glass.

(Layer structure of laminated glass)

Next, the layer structure of the laminated glass will be described in detail with reference to embodiments while referring to the drawings. As shown in Fig. 1, in a first embodiment of the present invention, the laminated glass is a laminated glass 1A which includes one interlayer film 10 for laminated glass (polyvinyl acetal resin layer) between first and second laminated glass members 20 and 30. In the laminated glass 1A, the interlayer film 10 for laminated glass is adhered to both the first and second laminated glass members 20 and 30 to join them together.

In the first embodiment, as described above, it is preferred that another member is attached to at least one of the first and second laminated glass members 20 and 30. Specifically, a functional member constituting an electronic device such as a display device, an optical member, or the like may be attached thereto, or the above-described functional film, functional layer, and the like may be laminated thereon.

Among these, it is preferred that a member constituting a display device, particularly a liquid crystal display device is attached to at least one of the first and second laminated glass members 20 and 30. That is, it is preferred that at least one of the first and second laminated glass members 20 and 30 is a glass sheet that constitutes a display device, and it is preferred that a display device which uses at least one of the first and second laminated glass members 20 and 30 as a

substrate is attached to the laminated glass 1A.

In the first embodiment, by using an interlayer film containing the polyvinyl acetal resin according to the present invention as the interlayer film 10 for laminated glass, appearance defects due to residual air or residual embossments during compression bonding can be suppressed even if the first and second laminated glass members 20 and 30 and the interlayer film 10 for laminated glass are integrated without going through an autoclave process under high-temperature and high-pressure conditions. On the other hand, even if a functional member is provided on any one of the first and second laminated glass members 20 and 30, it is possible to integrate by compression bonding without going through an autoclave process under high-temperature and high-pressure conditions, and therefore it is possible to prevent the functional member attached to the laminated glass 1A from deteriorating or losing functionality.

Further, as another preferred embodiment, the laminated glass may have an interlayer film for laminated glass composed of a plurality of thermoplastic resin layers provided between the first and second laminated glass members. When the interlayer film for laminated glass is composed of a plurality of thermoplastic resin layers, it suffices that at least one of the plurality of thermoplastic resin layers is the above-described polyvinyl acetal resin layer, but it is preferred that all of the plurality of thermoplastic resin layers are the above-described polyvinyl acetal resin layer. When a plurality of thermoplastic resin layers are provided, it is preferred that all the thermoplastic resin layers are also the above-described polyvinyl acetal resin layer. With such resin layers, it is easier to appropriately suppress appearance defects due to residual air or residual embossments during compression bonding and air bubbles caused by use in a high-temperature environment even if the first and second laminated glass members and the interlayer film for laminated glass are integrated without going through an autoclave process under high-temperature and high-pressure conditions.

An embodiment of laminated glass in which a plurality of thermoplastic resin layers are provided is shown in Fig. 2 as a second embodiment. As shown in Fig. 2, a laminated glass 1B according to the second embodiment includes a pair of interlayer films 10 for laminated glass provided between the first and second laminated glass members 20 and 30, and further includes a functional layer 40 between the pair of interlayer films 10 for laminated glass. That is, in the laminated glass 1B according to the second embodiment, a laminated body 50 in which the functional layer 40 is provided between a pair of interlayer films 10 for laminated glass is provided between the first and second laminated glass members 20 and 30. It is preferred that each of the pair of interlayer films 10 for laminated glass is the above-described polyvinyl acetal resin layer.

In the laminated glass 1B, one interlayer film 10 for laminated glass is adhered to both the first laminated glass member 20 and the functional layer 40 to join them together, and the other interlayer film 10 for laminated glass is adhered to both the second laminated glass member 30 and the functional layer 40 to join them together. As a result, the first and second laminated glass members 20 and 30 are integrated with the functional layer 40 by the interlayer film 10 for laminated glass, which is a polyvinyl acetal resin layer.

In the second embodiment, the laminated glass 1B may also be integrated through an autoclave process under high-temperature and high-pressure conditions. However, by using an interlayer film 10 for laminated glass that has the above-described polyvinyl acetal resin layer without going through an autoclave process under high-temperature and high-pressure conditions, it is possible to prevent appearance defects due to, for example, residual air or residual embossments during compression bonding and air bubbles caused by use in a high-temperature environment. Further, since the laminated glass 1B is integrated at a low temperature, it is possible to prevent the functional layer 40 from deteriorating or losing functionality.

In addition, in the second embodiment, an aspect is shown in which two interlayer films 10 for laminated glass and one functional layer 40 are provided in the laminated body, but three or more interlayer films for laminated glass and two or more functional layers may be provided in the laminated body. In this case, in the first and second laminated glass, the interlayer films for laminated glass and functional layers may be arranged alternately. Further, it is preferred that an interlayer film for laminated glass is respectively arranged at the position closest to the first and second laminated glass members.

For example, when three interlayer films 10 for laminated glass and two functional layers are provided, the arrangement order is preferably first laminated glass member/interlayer film for laminated glass/functional layer/interlayer film for laminated glass/functional layer/interlayer film for laminated glass/second laminated glass member.

Further, when three or more interlayer films for laminated glass are provided, it is preferred that the above-described polyvinyl acetal resin layer is used for each interlayer film for laminated glass.

In the laminated glass, when a plurality of interlayer films for laminated glass are provided, the configuration of each interlayer film for laminated glass may be the same or different.

(Laminated glass production method)

It is preferred to produce the laminated glass according to the present invention by arranging at least an interlayer film for laminated glass or a laminated body between a first laminated glass member and a second laminated glass member, and bonding them together by compression bonding to obtain laminated glass. Further, laminated glass

incorporating a laminated body may be produced by preparing the members constituting the laminated body, arranging the members constituting the laminated body between a first laminated glass member and a second laminated glass member, and bonding them together by compression bonding.

In the above-described production method, firstly, the first and second laminated glass members and the member (interlayer film for laminated glass, or laminated body, or the like) to be arranged between the first and second laminated glass members are prepared.

Here, the member to be arranged between the first and second laminated glass members may be appropriately selected according to the structure of the laminated glass to be obtained. For example, in the first embodiment, a single interlayer film for laminated glass may be prepared. Further, for example, in the second embodiment, a laminated body composed of two interlayer films for laminated glass and one functional layer may be prepared.

Further, as described above, in laminated glass, in some cases a functional member may be attached to at least one of the first and second laminated glass members, but it is preferred that the functional member is attached to the laminated glass member before integrating with the laminated glass. Therefore, in the above-described production method, at least one of the first and second laminated glass members may be prepared as the laminated glass member to which the functional member is attached. For example, as described above, if the laminated glass member constitutes the substrate of a display device, at least one of the first and second laminated glass members may be prepared as the display device.

In the present production method, as described above, an interlayer film for laminated glass or a laminated body may be arranged between the first laminated glass member and the second laminated glass member, and those parts may be integrated by bonding them together to obtain the laminated glass. Alternatively, a member constituting a laminated body may be arranged between the first laminated glass member and the second laminated glass member, and those parts may be integrated by bonding them together to obtain laminated glass incorporating the laminated body.

Here, the interlayer film for laminated glass or the laminated body may be arranged according to the layer structure of the laminated glass to be obtained. For example, in the second embodiment, the interlayer film for laminated glass, the functional layer, and the interlayer film for laminated glass may be arranged in that order between the first and second laminated glass members.

The bonding may be performed using a vacuum bag, an autoclave under low-temperature conditions, or a pressing machine other than these. However, among these methods, it is preferred to use a vacuum bag. Further, before performing the bonding, preliminary compression bonding may be carried out using a rubber roll or the like.

In the present production method, it is necessary to perform the bonding under low-temperature conditions. Specifically, it is preferred to perform the compression bonding at a temperature of 110°C or lower. Further, it is preferred that the bonding is compression bonding performed at preferably a low temperature and low pressure, specifically, at a temperature of 110°C or lower and a pressure of 1.0 MPa or less. By performing the bonding under low-temperature and low-pressure conditions in this way, it is possible to prevent the functional layer and the functional members (for example, display devices) attached to the first and second laminated glass members from deteriorating or losing functionality.

The temperature during bonding is preferably 100°C or lower from the viewpoint of more reliably preventing the functional members from deteriorating or losing functionality, and preferably 60°C or higher, more preferably 70°C or higher, from the viewpoint of preventing the occurrence of residual air orresidual embossments and the formation of air bubbles.

Further, the pressure during bonding is preferably 1.2 MPa or less from the viewpoint of more reliably preventing the functional members from deteriorating or losing functionality. In addition, when the bonding is performed under negative pressure, such as when using a vacuum bag, the pressure may be, for example, 0.095 MPa or less, preferably 0.08 MPa or less, and preferably 0.06 MPa or less.

The pressure when performing the bonding is not particularly limited in terms of the lower limit value, but for example, when the bonding is carried out under pressure such as in an autoclave, the pressure is preferably 0.5 MPa or more, and more preferably 0.7 MPa or more. Further, when performing the bonding under negative pressure as in the case of using a vacuum bag, the pressure is preferably 0.001 MPa or more, and more preferably 0.005 MPa or more.

Further, the duration of the bonding at the above-described temperature and pressure is not particularly limited, but is, for example, from 5 to 120 minutes, and preferably from 10 to 60 minutes.

The laminated glass according to the present invention is not particularly limited, and can be used for various applications. For example, the laminated glass according to the present invention can be used for the window glass of vehicles such as automobiles and trains, various conveyances such as ships and aircraft, or various structures such as buildings, apartments, detached houses, halls, and gymnasiums, or machine tools such as cutting and polishing tools, working machinery such as excavators and cranes, and the like, and for the partitions inside various conveyances and various structures. Among these, applications in vehicles such as automobiles are preferred, and applications for the window glass of a vehicle is preferred.

Further, the laminated glass according to the present invention may be used for various display applications, for example, when a display device is built from a laminated glass member. As a display application, the above-described

window glass or partition may be used as a display.

Additionally, the laminated glass may be used, for example, as a cover glass for various displays, and may be applied to, for example, an in-vehicle display.

Examples

The present invention will now be described in more detail with reference to Examples, but the present invention is not limited to these Examples in any way. In addition, the methods for measuring and evaluating the various physical property values in the present invention are as follows.

<Measurement of $^{13}C$-NMR spectrum>

$^{13}C$-NMR measurement was performed using a 400 MHz spectrometer using a nuclear magnetic resonance (NMR) device (manufactured by Bruker, trade name "AVANCE III HD"). PVB was dissolved in deuterated dimethyl sulfoxide (DMSO) to a concentration of 12% by mass. NMR measurement was performed at a temperature of 80°C using an inverse gate decoupling method. The horizontal axis represents the chemical shift in ppm, and the chemical shift standard was 39.5 ppm for DMSO-d6. Table 1 shows the range of the integration values of the peaks attributed to the methylene C atom or methine C atom at the position of the structural unit in the $^{13}C$-NMR spectrum.

Table 1

| Structural unit | Position of methylene C atom or methine C atom | Integration value range (ppm) |
|---|---|---|
| (a) | (a)' | 44.6-46 |
| (b) | (b)' | 43-44.6 |
| (c) | (c)' | 43-44.6 |
| (d) | (d)' | 98.5-101.4 |
| | (l)' | 71.0-74.5 |
| (e) | (e)' | 92.5-94.5 |
| | $(h)'_1$ | 66.6-70.0 |
| (f) | (f)' | 64.0-64.8 |
| (g) | (g)' | 65.8-66.6 |
| (h) | $(h)'_2$ | 66.6-70.0 |
| (i) | (i)' | 61.7-63.1 |
| (j) | (j)' | 64.8-65.8 |
| (k) | (k)' | 63.1-64.0 |

<Degree of acetalization, hydroxyl value, and degree of acetylation>

- Measurement of content (% by mass) of ethylene groups to which a hydroxyl group is bonded

A sample 0.4 g was precisely weighed into a 200 mL Erlenmeyer flask having a stopper. After adding 10.0 mL of a pyridine-acetic anhydride mixed solution to the sample, the sample was dissolved in the pyridine-acetic anhydride mixed solution by heating and subjecting to ultrasonic irradiation on a water bath with a bath temperature of 90°C. A reflux condenser tube was attached to the Erlenmeyer flask, and the mixture was heated under reflux on a water bath for 120 minutes. After the reaction, the condenser tube was washed with 25 mL of pyridine, and the sample solution after the reaction was cooled to room temperature. After cooling, 20 mL of 1,2-dichloroethane was added to the sample solution and shaken. Then, 50 mL of water was additionally added, shaken, and the mixture was allowed to stand at room temperature for 30 minutes. Then, the sample solution was subjected to potentiometric titration with a 0.5 mol/L (0.5 N) sodium hydroxide solution. A blank test was conducted in the same manner except that no sample was used, and the content (% by mass) of ethylene groups to which a hydroxyl group is bonded in the sample was determined based on the following expression.

$$W_{OH} = \frac{(V_{BL} - V_{sp}) \times 2.2 \times f_{NaOH}}{m \times 100} \times 100$$

In the expression, $W_{OH}$ is the content (% by mass) of ethylene groups to which a hydroxyl group is bonded, $V_{BL}$ is the amount of sodium hydroxide solution used in the blank test (mL), $V_{sp}$ is the amount of sodium hydroxide solution used in the sample titration (mL), $f_{NaOH}$ is the factor of the 0.5 mol/L sodium hydroxide solution actually used in the potentiometric titration, and m is the sample mass (g).

- Measurement of content (% by mass) of ethylene groups to which an acetyl group is bonded

A sample 0.4 g was precisely weighed into a 200 mL Erlenmeyer flask having a stopper. After adding 100.0 mL of ethanol to the sample, the sample was dissolved in the ethanol by heating and subjecting to ultrasonic irradiation on a water bath with a bath temperature of 90°C. While shaking the Erlenmeyer flask, 10.0 mL of 0.2 mol/L (0.2 N) sodium hydroxide was added. A reflux condenser tube was attached to the Erlenmeyer flask, and the mixture was heated under reflux in a water bath for 60 minutes. After the reaction, the condenser tube was washed with 25 mL of ethanol, and the sample solution after the reaction was cooled to room temperature. After cooling, 10.0 mL of 0.2 mol/L (0.2 N) hydrochloric acid was added to the sample solution, shaken thoroughly, and allowed to stand at room temperature for 30 minutes. Then, the sample solution was subjected to potentiometric titration with a 0.1 mol/L (0.1 N) sodium hydroxide solution. A blank test was conducted in the same manner except that no sample was used, and the content (% by mass) of ethylene groups to which an acetyl group is bonded in the sample was determined based on the following expression.

$$W_{Ac} = \frac{(V_{sp} - V_{BL}) \times 0.86 \times f_{NaOH}}{m \times 100} \times 100$$

In the expression, $W_{AC}$ is the content (% by mass) of ethylene groups to which an acetyl group is bonded, $V_{BL}$ is the amount of sodium hydroxide solution used in the blank test (mL), $V_{sp}$ is the amount of sodium hydroxide solution used in the sample titration (mL), $f_{NaOH}$ is the factor of the 0.1 mol/L sodium hydroxide solution actually used in the potentiometric titration, and m is the sample mass (g).

- Measurement of content (% by mass) of ethylene groups to which a butyral group is bonded

The content (% by mass) of ethylene groups to which a butyral group is bonded was determined based on the following expression from the content (% by mass) of ethylene groups to which a hydroxyl group is bonded and the content (% by mass) of ethylene groups to which an acetyl group is bonded determined by the methods described above.

$$W_{Bu} = 100 - (W_{OH} + W_{Ac})$$

In the expression, $W_{BU}$ is the content (% by mass) of ethylene groups to which a butyral group is bonded, $W_{OH}$ is the content (% by mass) of ethylene groups to which a hydroxyl group is bonded, and $W_{AC}$ is the content (% by mass) of ethylene groups to which an acetyl group is bonded.

- Amount of hydroxyl groups, degree of acetylation, and degree of acetalization (degree of butyralization)

The amount of hydroxyl groups (mol%), the degree of acetylation (mol%), and the degree of acetalization (mol%) were determined based on the following expression using the content (% by mass) of ethylene groups to which a hydroxyl group is bonded, the content of ethylene groups to which an acetyl group is bonded, and the content of ethylene groups to which a butyral group is bonded determined by the methods described above.

$$\text{Amount of hydroxyl groups} = \frac{\frac{W_{OH}}{44}}{\frac{W_{OH}}{44} + \frac{W_{Ac}}{86} + \frac{W_{Bu}}{71}} \times 100$$

$$\text{Degree of acetylation} = \frac{\frac{W_{Ac}}{86}}{\frac{W_{OH}}{44} + \frac{W_{Ac}}{86} + \frac{W_{Bu}}{71}} \times 100$$

$$\text{Degree of acetalization} = \frac{\frac{W_{Bu}}{71}}{\frac{W_{OH}}{44} + \frac{W_{Ac}}{86} + \frac{W_{Bu}}{71}} \times 100$$

<Weight-average molecular weight>

The thermoplastic resin used in each Example and Comparative Example was dissolved to a concentration of 0.05% by mass in an N-methyl-2-pyrrolidone solution to which lithium bromide had been added to 10 mM, the resultant mixture was filtered using a syringe filter (manufactured by Merck, Millex-LH 0.45 μm), and the molecular weight was then measured using gel permeation chromatography (manufactured by Waters, e2690). The number-average molecular weight (Mn) and weight-average molecular weight (Mw) were calculated using a molecular weight calibration curve created using a monodisperse polystyrene standard sample, and the molecular weight distribution (Mw/Mn) was also calculated. Further, the column used was a Shodex GPC KF-806L (manufactured by Showa Denko K.K.), and the eluent used was an N-methyl-2-pyrrolidone solution to which lithium bromide had been added to 10 mM.

<Amount of change in thickness when performing compressive creep test>

A test sample having a diameter of 8 mm was produced by cutting out the interlayer film for laminated glass of each Example and Comparative Example according to the method described in the specification. Using the produced test sample, the amount of change in thickness was determined according to the method described in the specification.

<Residual air and residual embossments after lamination>

The obtained laminated glass was placed on a blackout curtain, and the transparency of the laminated glass was visually evaluated according to the following three grades.

A: Fully transparent
B: Partially opaque
C: Mostly opaque

For reference, Fig. 3(a) shows an example of laminated glass placed on the blackout curtain having an evaluation

of "A", Fig. 3(b) shows an example of laminated glass placed on the blackout curtain having an evaluation of "B", and Fig. 3(c) shows an example of laminated glass placed on the blackout curtain having an evaluation of "C".

<Formation of air bubbles at periphery>

The obtained laminated glass was placed on a blackout curtain, and the presence or absence of air bubbles at the edges was visually evaluated according to the following three grades.

A: No air bubbles at periphery
B: Some air bubbles at periphery
C: Lots of air bubbles at periphery

[Example 1]

(Synthesis of polyvinyl acetal resin)

Into a reactor equipped with a stirring device, 1800 mL of ion-exchanged water and 200 g of a polyvinyl alcohol A (average degree of polymerization 1700, degree of saponification 98 mol%) were charged and dissolved by heating while stirring to obtain a polyvinyl alcohol solution. Next, 30% hydrochloric acid was added as a catalyst to the solution so that the hydrochloric acid concentration was 0.2% by mass, the temperature was adjusted to 15°C, and then, while stirring, n-butyraldehyde was added so that the concentration was 10 mol%. Then, when n-butyraldehyde was added so that the concentration was 60 mol%, a white particulate polyvinyl butyral resin was precipitated. Ten minutes after precipitation, 30% hydrochloric acid was added so that the hydrochloric acid concentration was 1.8% by mass, the temperature was then increased to 52°C, and the mixture was aged at the aging temperature of 52°C for 2 hours.

Next, the solution was cooled and neutralized, and then the polyvinyl butyral resin was washed with water and dried to obtain resin 1 (polyvinyl butyral resin, amount of hydroxyl groups 27.4 mol%, degree of acetalization 70.7 mol%, degree of acetylation 1.9 mol%, and degree of polymerization 1700).

(Production of laminated glass)

A resin composition was obtained by mixing 40 parts by mass of a plasticizer (triethylene glycol-di-2-ethylhexanoate: 3GO) with 100 parts by mass of polyvinyl butyral resin. An interlayer film for laminated glass composed of a single polyvinyl butyral resin layer in the form of a film having a thickness of 800 μm was produced from the obtained resin composition using a hydraulic press and a spacer having a thickness of 800 μm. In addition, two sheets of 2.5 mm clear glass were prepared.

Next, the interlayer film for laminated glass was laid on one of the sheets of clear glass, and the other sheet of clear glass was further laid on the interlayer film for laminated glass to obtain a laminated body. The obtained laminated body was placed in a rubber bag, which is a vacuum bag, and degassed for 5 minutes at a vacuum level of 1325 Pa or less. Next, the still-degassed laminated body was placed in an oven, and the temperature was increased stepwise until the glass surface temperature reached 90°C. After the glass surface temperature reached 90°C, the laminated body was held at 90°C for 15 minutes to perform main compression bonding, and the temperature was then reduced to 35°C. Next, the pressure was returned to normal to obtain the laminated glass of Example 1.

[Example 2]

(Synthesis of polyvinyl acetal resin)

Into a reactor equipped with a stirring device, 1800 mL of ion-exchanged water and 200 g of a polyvinyl alcohol A (average degree of polymerization 1700, degree of saponification 98 mol%) were charged and dissolved by heating while stirring to obtain a polyvinyl alcohol solution. Next, 30% hydrochloric acid was added as a catalyst to the solution so that the hydrochloric acid concentration was 0.2% by mass, the temperature was adjusted to 15°C, and then, while stirring, n-butyraldehyde was added so that the concentration was 10 mol%. Then, when n-butyraldehyde was added so that the concentration was 60 mol%, a white particulate polyvinyl butyral resin was precipitated. Ten minutes after precipitation, 30% hydrochloric acid was added so that the hydrochloric acid concentration was 1.8% by mass, the temperature was then increased to 53°C, and the mixture was aged at the aging temperature of 53°C for 2 hours.

Next, the solution was cooled and neutralized, and then the polyvinyl butyral resin was washed with water and dried to obtain resin 2 (polyvinyl butyral resin, amount of hydroxyl groups 27.3 mol%, degree of acetalization 71.9 mol%, degree of acetylation 0.9 mol%, and degree of polymerization 1700).

(Production of laminated glass)

The laminated glass of Example 2 was obtained in the same manner as in Example 1, except that the amount and type of resin used and the amount of plasticizer were changed to as shown in Table 2.

[Example 3]

(Synthesis of polyvinyl acetal resin)

Into a reactor equipped with a stirring device, 1800 mL of ion-exchanged water and 200 g of a polyvinyl alcohol A (average degree of polymerization 1700, degree of saponification 99 mol%) were charged and dissolved by heating while stirring to obtain a polyvinyl alcohol solution. Next, 30% hydrochloric acid was added as a catalyst to the solution so that the hydrochloric acid concentration was 0.2% by mass, the temperature was adjusted to 15°C, and then, while stirring, n-butyraldehyde was added so that the concentration was 10 mol%. Then, when n-butyraldehyde was added so that the concentration was 60 mol%, a white particulate polyvinyl butyral resin was precipitated. Ten minutes after precipitation, 30% hydrochloric acid was added so that the hydrochloric acid concentration was 1.8% by mass, the temperature was then increased to 53°C, and the mixture was aged at the aging temperature of 53°C for 2 hours.

Next, the solution was cooled and neutralized, and then the polyvinyl butyral resin was washed with water and dried to obtain resin 3 (polyvinyl butyral resin, amount of hydroxyl groups 27.5 mol%, degree of acetalization 71.5 mol%, degree of acetylation 1.0 mol%, and degree of polymerization 1700).

(Production of laminated glass)

The laminated glass of Example 3 was obtained in the same manner as in Example 1, except that the amount and type of resin used and the amount of plasticizer were changed to as shown in Table 2.

[Example 4]

(Synthesis of polyvinyl acetal resin)

Into a reactor equipped with a stirring device, 1800 mL of ion-exchanged water and 200 g of a polyvinyl alcohol A (average degree of polymerization 1700, degree of saponification 99 mol%) were charged and dissolved by heating while stirring to obtain a polyvinyl alcohol solution. Next, 30% hydrochloric acid was added as a catalyst to the solution so that the hydrochloric acid concentration was 0.2% by mass, the temperature was adjusted to 15°C, and then, while stirring, n-butyraldehyde was added so that the concentration was 10 mol%. Then, when n-butyraldehyde was added so that the concentration was 60 mol%, a white particulate polyvinyl butyral resin was precipitated. Ten minutes after precipitation, 30% hydrochloric acid was added so that the hydrochloric acid concentration was 1.8% by mass, the temperature was then increased to 57.5°C, and the mixture was aged at the aging temperature of 57.5°C for 2 hours.

Next, the solution was cooled and neutralized, and then the polyvinyl butyral resin was washed with water and dried to obtain resin 4 (polyvinyl butyral resin, amount of hydroxyl groups 28.2 mol%, degree of acetalization 71.0 mol%, degree of acetylation 0.8 mol%, and degree of polymerization 1700).

(Production of laminated glass)

The laminated glass of Example 4 was obtained in the same manner as in Example 1, except that the amount and type of resin used and the amount of plasticizer were changed to as shown in Table 2.

[Example 5]

(Synthesis of polyvinyl acetal resin)

Into a reactor equipped with a stirring device, 1800 mL of ion-exchanged water and 200 g of a polyvinyl alcohol A (average degree of polymerization 1700, degree of saponification 99 mol%) were charged and dissolved by heating while stirring to obtain a polyvinyl alcohol solution. Next, 30% hydrochloric acid was added as a catalyst to the solution so that the hydrochloric acid concentration was 0.2% by mass, the temperature was adjusted to 15°C, and then, while stirring, n-butyraldehyde was added so that the concentration was 10 mol%. Then, when n-butyraldehyde was added so that the concentration was 60 mol%, a white particulate polyvinyl butyral resin was precipitated. Ten minutes after precipitation, 30% hydrochloric acid was added so that the hydrochloric acid concentration was 1.8% by mass, the temperature was then

increased to 52.5°C, and the mixture was aged at the aging temperature of 52.5°C for 2 hours.

Next, the solution was cooled and neutralized, and then the polyvinyl butyral resin was washed with water and dried to obtain resin 5 (polyvinyl butyral resin, amount of hydroxyl groups 28.6 mol%, degree of acetalization 70.9 mol%, degree of acetylation 0.6 mol%, and degree of polymerization 1700).

(Production of laminated glass)

The laminated glass of Example 5 was obtained in the same manner as in Example 1, except that the amount and type of resin used and the amount of plasticizer were changed to as shown in Table 2.

[Comparative Example 1]

(Synthesis of polyvinyl acetal resin)

Into a reactor equipped with a stirring device, 1800 mL of ion-exchanged water and 200 g of a polyvinyl alcohol A (average degree of polymerization 1700, degree of saponification 99 mol%) were charged and dissolved by heating while stirring to obtain a polyvinyl alcohol solution. Next, 30% hydrochloric acid was added as a catalyst to the solution so that the hydrochloric acid concentration was 0.2% by mass, the temperature was adjusted to 15°C, and then, while stirring, n-butyraldehyde was added so that the concentration was 10 mol%. Then, when n-butyraldehyde was added so that the concentration was 60 mol%, a white particulate polyvinyl butyral resin was precipitated. Ten minutes after precipitation, 30% hydrochloric acid was added so that the hydrochloric acid concentration was 1.8% by mass, the temperature was then increased to 66°C, and the mixture was aged at the aging temperature of 66°C for 2 hours. Next, the solution was cooled and neutralized, and then the polyvinyl butyral resin was washed with water and dried to obtain the polyvinyl acetal resin of Comparative Example 1 (polyvinyl butyral resin, amount of hydroxyl groups 27.2 mol%, degree of acetalization 72.3 mol%, degree of acetylation 0.6 mol%, and degree of polymerization 1700).

(Production of laminated glass)

The laminated glass of Comparative Example 1 was obtained in the same manner as in Example 1, except that the amount and type of resin used and the amount of plasticizer were changed to as shown in Table 2.

[Comparative Example 2]

(Synthesis of polyvinyl acetal resin)

Into a reactor equipped with a stirring device, 1800 mL of ion-exchanged water and 200 g of a polyvinyl alcohol A (average degree of polymerization 1700, degree of saponification 98 mol%) were charged and dissolved by heating while stirring to obtain a polyvinyl alcohol solution. Next, 30% hydrochloric acid was added as a catalyst to the solution so that the hydrochloric acid concentration was 0.2% by mass, the temperature was adjusted to 15°C, and then, while stirring, n-butyraldehyde was added so that the concentration was 10 mol%. Then, when n-butyraldehyde was added so that the concentration was 60 mol%, a white particulate polyvinyl butyral resin was precipitated. Ten minutes after precipitation, 30% hydrochloric acid was added so that the hydrochloric acid concentration was 1.8% by mass, the temperature was then increased to 66°C, and the mixture was aged at the aging temperature of 66°C for 2 hours. Next, the solution was cooled and neutralized, and then the polyvinyl butyral resin was washed with water and dried to obtain the polyvinyl acetal resin of Comparative Example 2 (polyvinyl butyral resin, amount of hydroxyl groups 27.4 mol%, degree of acetalization 71.8 mol%, degree of acetylation 0.8 mol%, and degree of polymerization 1700).

(Production of laminated glass)

The laminated glass of Comparative Example 2 was obtained in the same manner as in Example 1, except that the amount and type of resin used and the amount of plasticizer were changed to as shown in Table 2.

The plasticizer used in the Examples and Comparative Examples is as follows.

3GO: Triethylene glycol-di-2-ethylhexanoate

The $^{13}C$-NMR spectrum of the polyvinyl acetal resin of Example 2 is shown in Fig. 4, and the $^{13}C$-NMR spectrum of the polyvinyl acetal resin of Comparative Example 1 is shown in Fig. 5. Further, Table 2 shows the evaluation results of Examples 1 to 5 and Comparative Examples 1 to 2.

Table 2

| | | | Example 1 | Example 2 | Example 3 | Example 4 | Example 5 | Comparative Example 1 | Comparative Example 2 |
|---|---|---|---|---|---|---|---|---|---|
| Polyvinyl acetal resin | $^{13}$C-NMR spectrum | I(a)' | 1.83 | 2.01 | 14.87 | 2.20 | 2.26 | 2.25 | 2.15 |
| | | I(b)'+I(c)' | 7.37 | 7.34 | 60.01 | 7.72 | 7.83 | 6.99 | 6.75 |
| | | I(d)' | 6.67 | 6.57 | 50.91 | 6.65 | 6.49 | 6.71 | 6.44 |
| | | I(e)' | 2.19 | 2.20 | 16.82 | 2.09 | 2.04 | 1.96 | 1.92 |
| | | I(f)' | 0.90 | 0.95 | 7.35 | 1.09 | 0.94 | 1.09 | 1.07 |
| | | I(g)' | 0.27 | 0.30 | 1.63 | 0.30 | 0.27 | 0.36 | 0.31 |
| | | $I(h)'_2$ ※1 | 0.48 | 0.38 | 2.50 | 0.27 | 0.26 | 0.25 | 0.27 |
| | | I(i)' | 2.08 | 2.08 | 16.05 | 1.88 | 2.12 | 1.90 | 1.87 |
| | | I(j)' | 0.54 | 0.63 | 3.96 | 0.56 | 0.61 | 0.50 | 0.50 |
| | | I(k)' | 3.13 | 3.12 | 23.93 | 3.15 | 3.13 | 3.00 | 2.94 |
| | | I(l)' | 12.84 | 12.69 | 98.68 | 12.82 | 12.99 | 13.09 | 12.73 |
| | | $I(h)'_1+I(h)'_2$ | 4.70 | 4.63 | 35.10 | 4.30 | 4.34 | 4.07 | 4.07 |
| | | [I(a)'/(I(b)'+I(c)')] | 0.248 | 0.274 | 0.248 | 0.285 | 0.289 | 0.322 | 0.319 |
| | | [I(d)'/(I(d)'+I(e)')] | 0.753 | 0.749 | 0.752 | 0.761 | 0.761 | 0.774 | 0.770 |
| | | R ※2 | 0.223 | 0.219 | 0.207 | 0.229 | 0.200 | 0.239 | 0.238 |
| | Degree of acetalization | mol% | 70.7 | 71.9 | 71.5 | 71.0 | 70.9 | 72.3 | 71.8 |
| | Weight-average molecular weight | - | 284521 | 274916 | 284368 | 264985 | 291141 | 256017 | 279725 |
| | Amount of change in thickness in compressive creep test | μm | 140 | 140 | 140 | 80 | 100 | 30 | 30 |
| Interlayer film for laminated glass | Polyvinyl acetal resin | Parts by mass | 100 | 100 | 100 | 100 | 100 | 100 | 100 |
| | Plasticizer | Type | 3GO | 3GO | 3GO | 3GO | 3GO | 3GO | 3GO |
| | | Parts by mass | 40 | 40 | 40 | 40 | 40 | 40 | 40 |

(continued)

| | | | Example 1 | Example 2 | Example 3 | Example 4 | Example 5 | Comparative Example 1 | Comparative Example 2 |
|---|---|---|---|---|---|---|---|---|---|
| Laminated glass | Evaluation | Residual air and residual embossments after lamination | A | A | A | B | B | C | C |
| | | Formation of air bubbles at periphery | A | A | A | A | A | A | A |

※1 $I(h)'_2=(I(h)'_1+I(h)'_2)-I(l)'*(I(e)'/I(d)')$

※2 $R=[(I(f)'+I(g)'+I(h)'_2)/(I(f)'+I(g)'+I(h)'_2+I(i)'+I(j)'+I(k)')]$

(Examples 6 to 8)

Examples 6 to 8 were performed in the same manner as in Example 1, except that the amount and type of resin used and the amount of plasticizer were changed to as shown in Table 3, and the following pigments were included.

Example 6:

Phthalocyanine pigment (P.B.15-1): In an amount of 0.0142% by mass in the obtained resin layer

Perylene pigment (P.R. 149): In an amount of 0.0030% by mass in the obtained resin layer

Phthalocyanine pigment (P.G.7): In an amount of 0.0015% by mass in the obtained resin layer

Carbon black pigment (P.Bk.7): In an amount of 0.0300% by mass in the obtained resin layer

Example 7:

Phthalocyanine pigment (P.B.15-1): In an amount of 0.0148% by mass in the obtained resin layer
Perylene pigment (P.R. 149): In an amount of 0.0054% by mass in the obtained resin layer
Phthalocyanine pigment (P.G.7): In an amount of 0.0060% by mass in the obtained resin layer
Carbon black pigment (P.Bk.7): In an amount of 0.0280% by mass in the obtained resin layer

Example 8:

Phthalocyanine pigment (P.B.15-1): In an amount of 0.0159% by mass in the obtained resin layer
Perylene pigment (P.R. 149): In an amount of 0.0062% by mass in the obtained resin layer
Phthalocyanine pigment (P.G.7): In an amount of 0.0020% by mass in the obtained resin layer
Carbon black pigment (P.Bk.7): In an amount of 0.0160% by mass in the obtained resin layer

Table 3

| | | | Example 6 | Example 7 | Example 8 |
|---|---|---|---|---|---|
| Polyvinyl acetal resin | $^{13}$C-NMR spectrum | I(a)' | 1.83 | 1.83 | 1.83 |
| | | I(b)'+I(c)' | 7.37 | 7.37 | 7.37 |
| | | I(d)' | 6.67 | 6.67 | 6.67 |
| | | I(e)' | 2.19 | 2.19 | 2.19 |
| | | I (f)' | 0.90 | 0.90 | 0.90 |
| | | I(g)' | 0.27 | 0.27 | 0.27 |
| | | $I(h)'_2$ ※1 | 0.48 | 0.48 | 0.48 |
| | | I(i)' | 2.08 | 2.08 | 2.08 |
| | | I(j)' | 0.54 | 0.54 | 0.54 |
| | | I(k)' | 3.13 | 3.13 | 3.13 |
| | | I(l)' | 12.84 | 12.84 | 12.84 |

(continued)

| | | | Example 6 | Example 7 | Example 8 |
|---|---|---|---|---|---|
| | | $I(h)'_1+I(h)'_2$ | 4.70 | 4.70 | 4.70 |
| | | [I(a)'/(I(b)'+I(c)')] | 0.248 | 0.248 | 0.248 |
| | | [I(d)'/(I(d)'+I(e)')] | 0.753 | 0.753 | 0.753 |
| | | R ※2 | 0.223 | 0.223 | 0.223 |
| | Degree of acetalization | mol% | 70.7 | 70.7 | 70.7 |
| | Weight-average molecular weight | - | 284521 | 284521 | 284521 |
| | Amount of change in thickness in compressive creep test | μm | 140 | 140 | 140 |
| Interlayer film for laminated glass | Polyvinyl acetal resin | Parts by mass | 100 | 100 | 100 |
| | Plasticizer | Type | 3GO | 3GO | 3GO |
| | | Parts by mass | 40 | 40 | 40 |
| | Colorant | Type | P.B.15-1 | P.B.15-1 | P.B.15-1 |
| | | Content (wt%) | 0.0142 | 0.0148 | 0.0159 |
| | | Type | P.R.149 | P.R.149 | P.R.149 |
| | | Content (wt%) | 0.0030 | 0.0054 | 0.0062 |
| | | Type | P.G.7 | P.G.7 | P.G.7 |
| | | Content (wt%) | 0.0015 | 0.0060 | 0.0020 |
| | | Type | P.Bk.7 | P.Bk.7 | P.Bk.7 |
| | | Content (wt%) | 0.0300 | 0.0280 | 0.0160 |
| Laminated glass | Evaluation | Residual air and residual embossments after lamination | AA | AA | AA |
| | | Formation of air bubbles at periphery | AA | AA | AA |

※1 $I(h)'_2=(I(h)'_1+I(h)'_2)-I(I)'*(I(e)'/I(d)')$
※2 $R=[(I(f)'+I(g)'+I(h)'_2)/(I(f)'+I(g)'+I(h)'_2+I(i)'+I(j)'+I(k)')]$

The laminated glass of each of Examples 1 to 5 was produced using a polyvinyl acetal resin that satisfied the above expression (1) and that had a degree of acetalization of 65 mol% or more and less than 75 mol%. As a result, even though the bonding conditions were a low temperature and a low pressure, there was less residual air or embossments during bonding, and the laminated glass had high transparency. Further, bubble formation at a peripheral portion of the interlayer film for laminated glass hardly occurred. In addition, the film formability of the interlayer film for laminated glass was good.

On the other hand, the laminated glass of each of Comparative Examples 1 and 2 was produced using a polyvinyl acetal resin that did not satisfy the above expression (1), and thus there was a lot of residual air or embossments during bonding. As a result, the transparency of the laminated glass was poor.

Reference Signs List

| | |
|---|---|
| 1A, 2B | laminated glass |
| 10 | interlayer film for laminated glass (polyvinyl acetal resin layer) |
| 20 | first laminated glass member |
| 30 | second laminated glass member |
| 40 | functional layer |
| 50 | laminated body |

## Claims

**1.** A polyvinyl acetal resin comprising a structural unit (a) represented by the following formula (a), a structural unit (b) represented by the following formula (b), and a structural unit (c) represented by the following formula (c), the following expression (1) being satisfied, wherein an integration value of a peak attributed to a methylene C atom at position (a)' of the structural unit (a) is designated as I(a)', an integration value of a peak attributed to a methylene C atom at position (b)' of the structural unit (b) is designated as I(b)', and an integration value of a peak attributed to a methylene C atom at position (c)' of the structural unit (c) is designated as I(c)' in a $^{13}$C-NMR spectrum obtained by $^{13}$C-NMR (nuclear magnetic resonance) measurement, and

the polyvinyl acetal resin having a degree of acetalization of 65 mol% or more and less than 75 mol%,

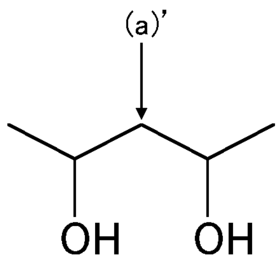

(a)

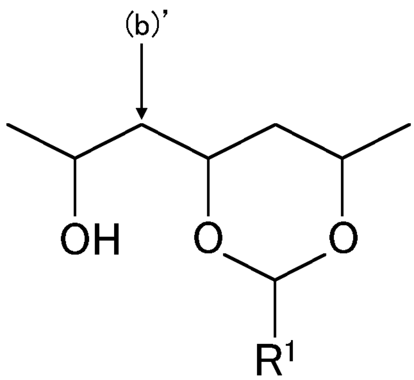

(b)

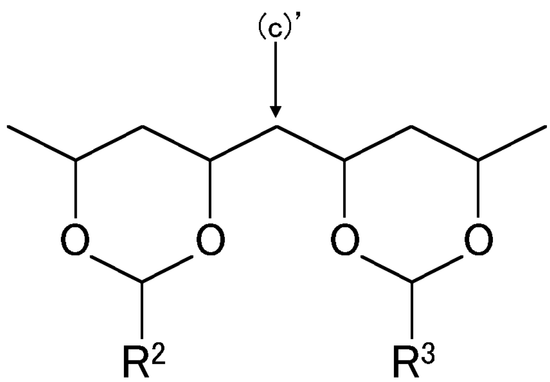

(c)

$$I(a)'/(I(b)'+I(c)')<0.30\ (1)$$

wherein $R^1$, $R^2$, and $R^3$ in formula (b) and formula (c) are each hydrogen or a hydrocarbon group having 1 or more and 9 or less carbon atoms.

2. The polyvinyl acetal resin according to claim 1, which comprises a structural unit (d) represented by the following formula (d) and a structural unit (e) represented by the following formula (e), the following expression (2) being satisfied,

wherein an integration value of a peak attributed to a methine C atom at position (d)' of the structural unit (d) is designated as I(d)' and an integration value of a peak attributed to a methine C atom at position (e)' of the structural unit (e) is designated as I(e)' in a $^{13}C$-NMR spectrum obtained by $^{13}C$-NMR (nuclear magnetic resonance) measurement,

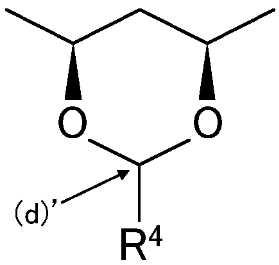


(d)

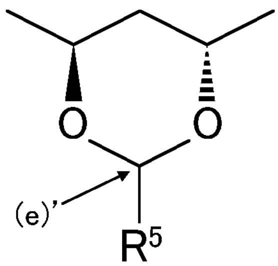


(e)

$$I(d)'/(I(d)'+I(e)')<0.763\ (2)$$

wherein $R^4$ and $R^5$ in formula (d) and formula (e) are each hydrogen or a hydrocarbon group having 1 or more and 9 or less carbon atoms.

3. The polyvinyl acetal resin according to claim 1 or 2, which comprises a structural unit (f) represented by the following formula (f), a structural unit (g) represented by the following formula (g), a structural unit (h) represented by the following formula (h), a structural unit (i) represented by the following formula (i), a structural unit (j) represented by the following formula (j), and a structural unit (k) represented by the following formula (k), the following expression (3) being satisfied,

wherein an integration value of a peak attributed to a methine C atom at position (f)' of the structural unit (f) is designated as I(f)', an integration value of a peak attributed to a methine C atom at position (g)' of the structural unit (g) is designated as I(g)', an integration value of a peak attributed to a methine C atom at position $(h)'_2$ of the structural unit (h) is designated as $I(h)'_2$, an integration value of a peak attributed to a methine C atom at position (i)' of the structural unit (i) is designated as I(i)', an integration value of a peak attributed to a methine C atom at position (j)' of the structural unit (j) is designated as I(j)', and an integration value of a peak attributed to a methine C atom at position (k)' of the structural unit (k) is designated as I(k)' in a $^{13}C$-NMR spectrum obtained by $^{13}C$-NMR (nuclear magnetic resonance) measurement,

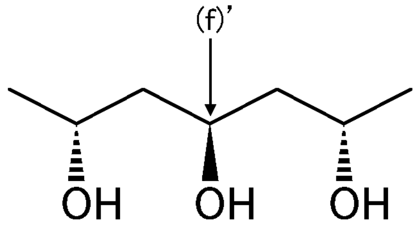

(f)

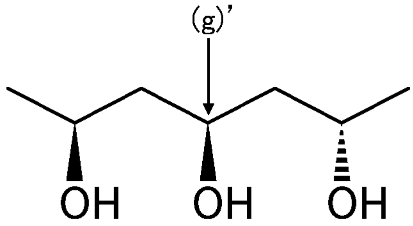

(g)

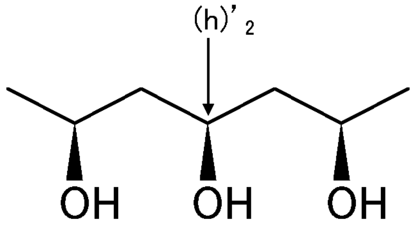

(h)

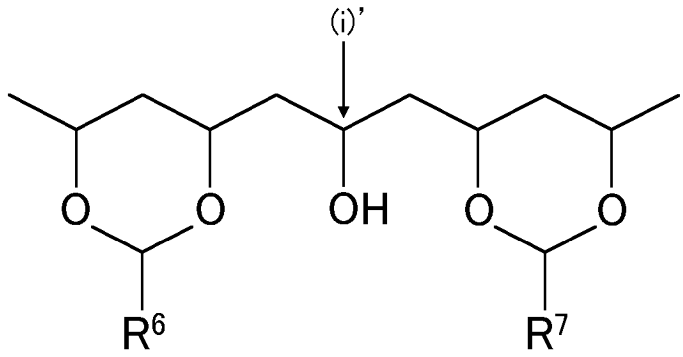

(i)

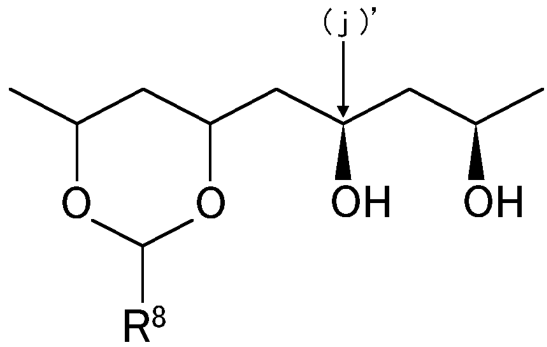

( j )

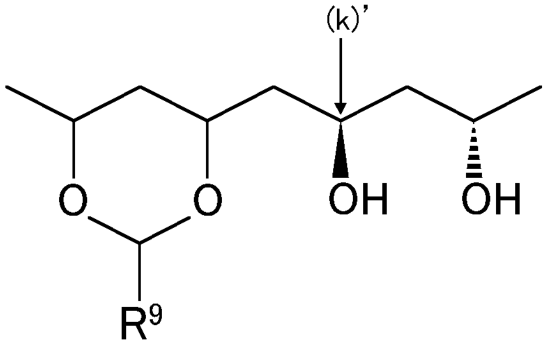

(k)

$$(I(f)'+I(g)'+I(h)'_2)/(I(f)'+I(g)'+I(h)'_2+I(i)'+I(j)'+I(k)')<0.23 \quad (3)$$

wherein $R^6$ to $R^9$ in formula (i), formula (j), and formula (k) are each hydrogen or a hydrocarbon group having 1 or more and 9 or less carbon atoms.

**4.** The polyvinyl acetal resin according to any one of claims 1 to 3, which has a weight-average molecular weight (Mw) of 220000 or more.

**5.** An interlayer film for laminated glass comprising a single-layer structure or a multilayer structure, which comprises at least a polyvinyl acetal resin layer comprising the polyvinyl acetal resin according to any one of claims 1 to 4.

**6.** The interlayer film for laminated glass according to claim 5, wherein the polyvinyl acetal resin layer has an amount of change in thickness of 80 μm or more when compressed according to a compressive creep test conducted under the following conditions:
(Compressive creep test conditions)
A test sample having a diameter of 8 mm and a thickness of 700 to 900 μm produced from the polyvinyl acetal resin layer is compressed for 30 minutes under a load of 410 g and a temperature of 30°C, a thickness (T1) of the test sample is then measured, the temperature is then increased from 30°C to 90°C at a heating rate of 6°C/min while maintaining the load of 410 g, the test sample is compressed for 5 minutes under the load of 410 g and temperature of 90°C, a thickness (T2) of the test sample A is then measured, and an absolute value of a difference between the thickness (T1) and the thickness (T2) of the test sample is taken as the amount of change in thickness.

**7.** The interlayer film for laminated glass according to claim 5 or 6, wherein the polyvinyl acetal resin layer further comprises a plasticizer.

**8.** The interlayer film for laminated glass according to claim 7, wherein the plasticizer is at least one plasticizer selected from the group consisting of triethylene glycol-di-2-ethylhexanoate (3GO), polyoxyethylene polyoxypropylene glycol, polyoxypropylene glyceryl ether, polyoxypropylene diglyceryl ether, or a derivative of these in which a part of the hydrogen atoms of a terminal hydroxyl group is substituted with an alkyl group.

**9.** A laminated body comprising:

the interlayer film for laminated glass according to any one of claims 5 to 8; and
a functional layer different from the interlayer film for laminated glass.

**10.** Laminated glass comprising:

a first laminated glass member;
a second laminated glass member; and
the interlayer film for laminated glass according to any one of claims 5 to 8, which is arranged between the first laminated glass member and the second laminated glass member.

**11.** Laminated glass comprising:

a first laminated glass member;

a second laminated glass member; and
the laminated body according to claim 9, which is arranged between the first laminated glass member and the second laminated glass member.

Fig. 1

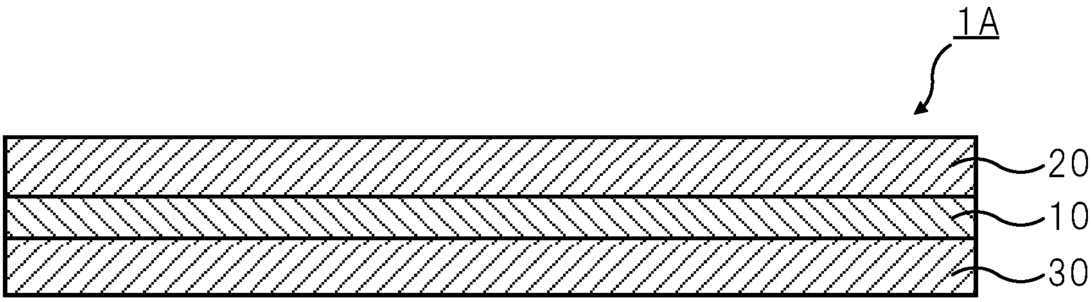


Fig. 2

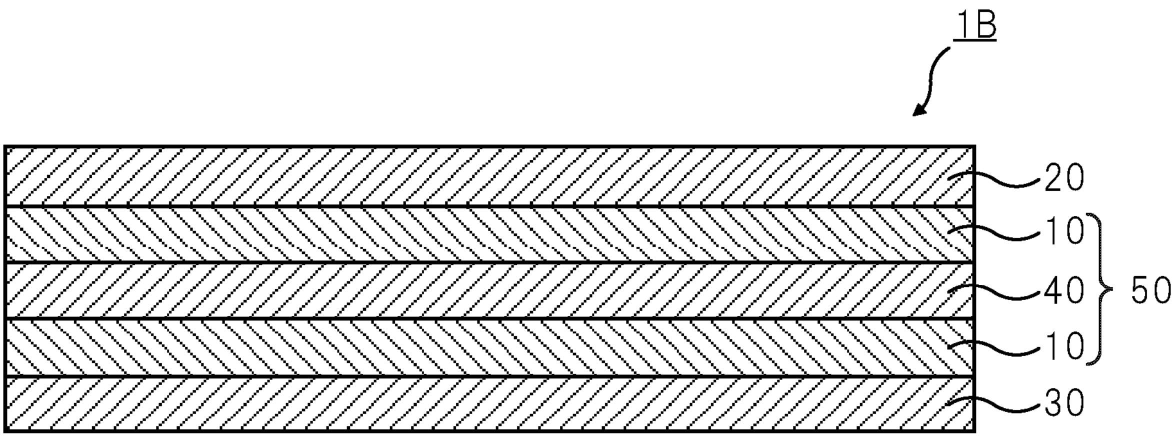

Fig. 3

(a)

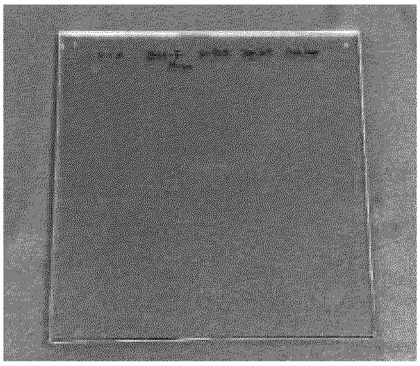

(b)

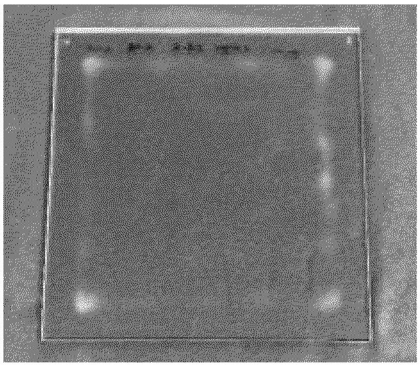

(c)

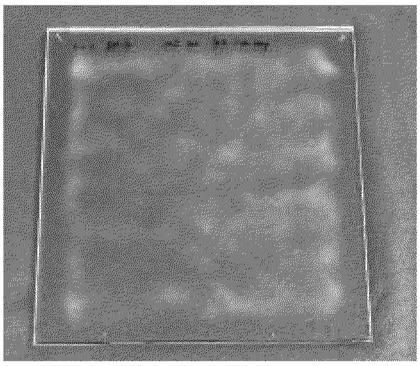

Fig. 4

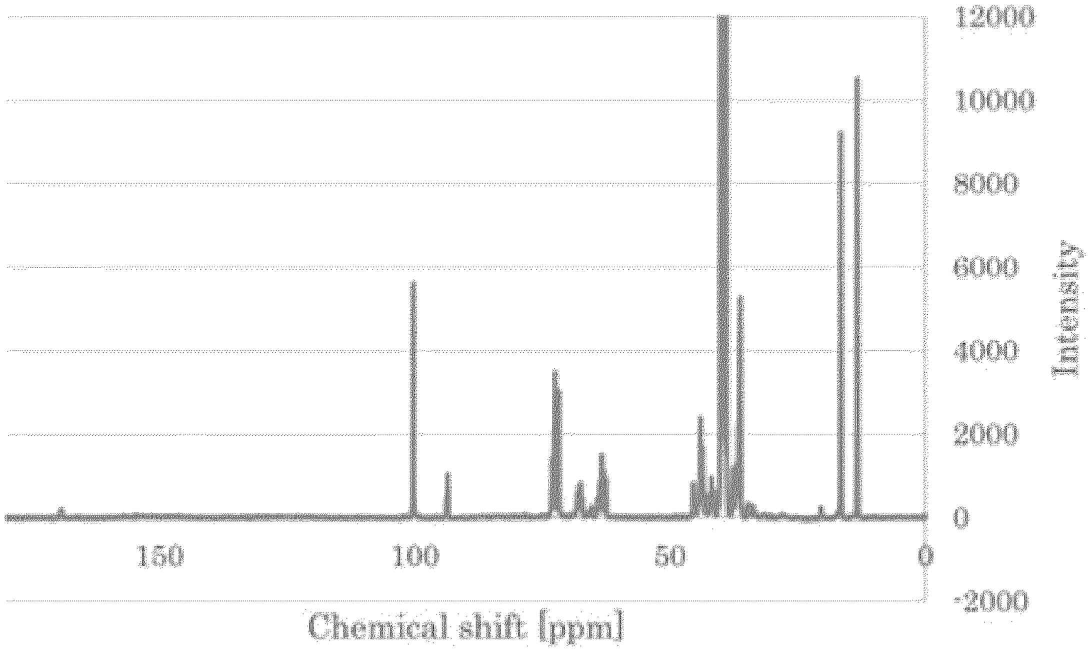
12000
10000
8000
6000
4000
2000
0
-2000
150
100
50
0
Intensity
Chemical shift [ppm]

Fig. 5

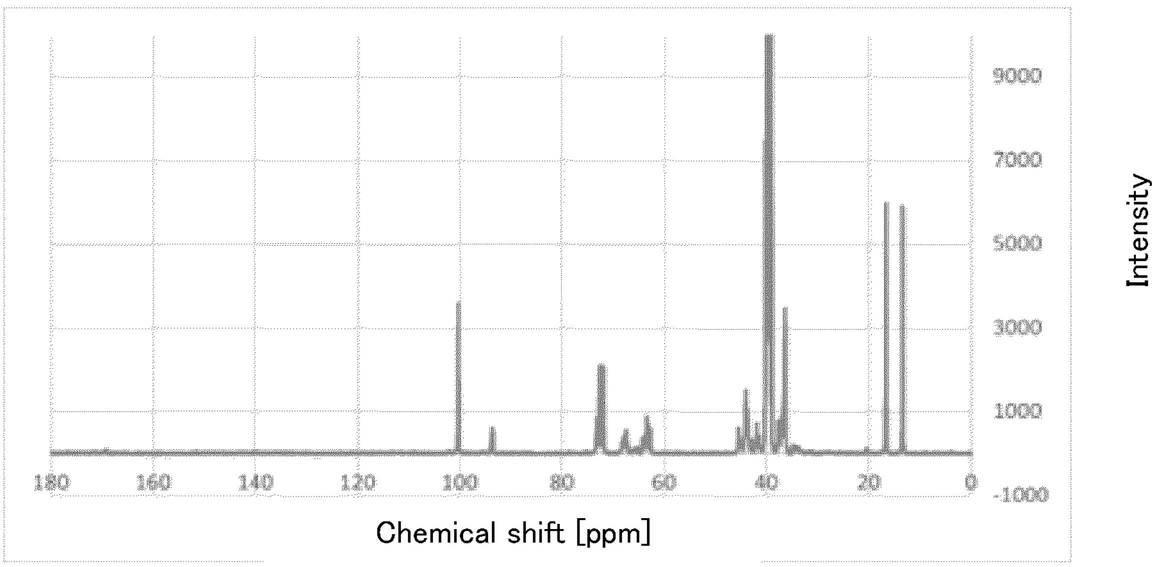
9000
7000
5000
3000
1000
-1000
180
160
140
120
100
80
60
40
20
0
Intensity
Chemical shift [ppm]

## INTERNATIONAL SEARCH REPORT

International application No.
**PCT/JP2023/043348**

**A. CLASSIFICATION OF SUBJECT MATTER**

***C08F 8/28***(2006.01)i; ***B32B 17/04***(2006.01)i; ***B32B 17/10***(2006.01)i; ***B32B 27/28***(2006.01)i; ***B60J 1/00***(2006.01)i; ***C03C 27/12***(2006.01)i; ***C08F 216/38***(2006.01)i; ***C08L 29/14***(2006.01)i
FI: C08F8/28; B32B17/10; B32B27/28 101; B60J1/00 H; C03C27/12 N; B32B17/04; C03C27/12 D; C08F216/38; C08L29/14

According to International Patent Classification (IPC) or to both national classification and IPC

**B. FIELDS SEARCHED**

Minimum documentation searched (classification system followed by classification symbols)

C08F8/28; B32B17/04; B32B17/10; B32B27/28; B60J1/00; C03C27/12; C08F216/38; C08L29/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2012/043819 A1 (SEKISUI CHEMICAL CO., LTD.) 05 April 2012 (2012-04-05) claims, paragraphs [0012], [0064]-[0065], [0203]-[0268], tables 2, 4, 5 | 1-11 |
| X | JP 2012-224500 A (SEKISUI CHEMICAL CO., LTD.) 15 November 2012 (2012-11-15) claims, paragraphs [0012]-[0013], [0103]-[0144], table 1 | 1-11 |
| X | JP 2015-151326 A (KURARAY CO., LTD.) 24 August 2015 (2015-08-24) claims, paragraphs [0107], [0142]-[0257] | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 January 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/043348**

| Patent document cited in search report | Publication date (day/month/year) | Patent family member(s) | Publication date (day/month/year) |
|---|---|---|---|
| WO 2012/043819 A1 | 05 April 2012 | US 2013/0183532 A1<br>claims, paragraphs [0012], [0063]-[0064], [0201]-[0283], tables 2, 4, 5<br>US 2014/0227537 A1<br>EP 2623474 A1<br>EP 3381680 A1<br>CN 103140451 A<br>CN 104987638 A | |
| JP 2012-224500 A | 15 November 2012 | (Family: none) | |
| JP 2015-151326 A | 24 August 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011127117 A
- JP 2019513865 T
- WO 2021117596 A1
- WO 2019066042 A1